# EUROPEAN PATENT APPLICATION

(11) **EP 0 877 061 A1**
(43) Date of publication of application: **11.11.1998**
(21) Application number: 97900783.8
(22) Date of filing: 27.01.1997
(51) Int. Cl.: C09D 5/14, C08K 5/55, C07F 5/02

(54) **TRIPHENYLBORANE-ROSIN AMINE ADDUCT AND USE OF THE SAME**

(30) Priority: 26.01.1996 JP 11339/96; 10.06.1996 JP 147602/96
(71) Applicant: Yoshitomi Fine Chemicals, Ltd., Osaka-shi, Osaka 541 (JP)
(72) Inventor: SHIMADA, Akira, Yoshitomi Fine Chemicals, Ltd., Yoshitomimachi, Chikujo-gun, Fukuoka 871 (JP); KOHARA, Masanori, Yoshitomi Fine Chemicals, Ltd., machi, Chikujo-gun, Fukuoka 871 (JP); SHIBUYA, Yoshifumi Yoshitomi Fine Chemicals, Ltd., Chuo-ku, Osaka-shi Osaka 541 (JP); HIDAKA, Yasuhiro Yoshitomi Fine Chemicals, Ltd., Chuo-ku, Osaka-shi Osaka 541 (JP)
(74) Representative: von Kreisler, Alek, Dipl.-Chem.
(86) International application number: JP9700176
(87) International publication number: WO9727254

(57) **Abstract**

The triphenylborane-rosin amine adduct shows superior prevention of adhesion, and thus, antifouling effects against coelenterates such as obelia and hydrozoas; shellfish such as barnacle, blue mussel and oyster, tubicolous polychaetes such as *Hydroides norvegica*, *Serpula vermicularis*, *Pomatoleios kraussii* and *Dexiospira spirillum* and other aquatic organisms. The concurrent use of 1,3-dicyanotetrachlorobenzene, 2-(thiocyanomethylthio)benzothiazole, tetraalkylthiuramdisulfide, 2,3-dichloromaleimide, phenol, dialkylpolysulfide, polybutene, paraffin or petrolatum, and the above-mentioned compound results in the above-mentioned effects. Thus, the above-mentioned compound can be used to provide a preventive of fouling by the aquatic adhesion organisms, an antifouling agent for a fishnet and an antifouling coating, which have superior antifouling effects against fouling organisms such as coelenterates, shellfish, tubicolous polychaetes and the like.

## Description

### Technical Field

The present invention relates to a novel triphenylborane-rosin amine adduct that is effectively used as an antifouling agent against aquatic adhesion organisms, such as an antifouling agent for a fishnet, that prevents fouling organisms from adhering to and growing on culture and fixed fishnets, and an antifouling coating that prevents fouling organisms from adhering to and growing on the bottom of a ship, a material used for a fishnet, such as buoy and rope, and condenser water channels of a nuclear energy or thermal power plant, and to use thereof.

### Background Art

Inasmuch as the bottom of a ship, culture and fixed fishnets and the like are kept in the sea or fresh water for a long time, aquatic organisms such as coelenterates (e.g., hydrozoas and obelia), shellfish, tubicolous polychaetes, algae, Polyzoa, Mollusca and the like tend to adhere thereto. Once these aquatic organisms adhere to the bottom of a ship, fishnets and the like, the ship and fishnets suffer damages that may result in a great economic loss. When barnacle adheres to a fishnet, for example, it closes the mesh of a net to prevent flow of the tide, which in turn results in shortage of underwater oxygen to cause death of cultured fish by suffocation, degraded workability during replacement of a net which gained weight, and breakage of the net when a typhoon hits, due to greater resistance to the big waves. When these organisms adhere to the bottom of a ship, the propulsive efficiency of the ship is reduced, increasing consumption of the fuel. In view of the above, these aquatic organisms are called fouling organisms. In an attempt to decrease the economic loss caused by the fouling organisms, great labor and cost have been expensed for the maintenance of objects susceptible to fouling.

Various researches and suggestions have been heretofore made to counter the adhesion organisms. From the practical viewpoint, it is known that a series of organic tin compounds are effective. The organic tin compounds, nevertheless, generally have strong toxicity to the extent that careless handling of products containing them can result in hazardous influence on the operator and that the environment can be destroyed. These difficulties have produced the demand for an antifouling agent against aquatic adhesion organisms, such as a low-pollution antifouling agent for a fishnet and a low-pollution antifouling coating.

For example, Japanese Patent Examined Publication No. 10849/1976 discloses an underwater antifouling coating containing a benzothiazole compound as an active ingredient; Japanese Patent Unexamined Publication Nos. 38306/1985, 284275/1988 and Japanese Patent Examined Publication No. 11606/1989 disclose various antifouling agents for fishnet, antifouling coating compositions and antifouling solutions for fishnet, wherein a tetraalkylthiuramdisulfide compound and other compounds are combined; Japanese Patent Examined Publication No. 50984/1986 discloses an anticontaminant agent for marine structures, which comprises a 3-isothiazolone compound as an active ingredient; and Japanese Patent Examined Publication Nos. 20665/1989 and 24242/1990, and Japanese Patent Unexamined Publication Nos. 9320/1978, 201804/1993, 100405/1994 and 100408/1994 disclose antifouling coatings containing a maleimide compound as an active ingredient.

As a coating for the bottom of a ship, various antifouling coatings, such as cuprous oxide, organic tin and thiocarbamate, have been studied.

However, these antifouling agents only have weak preventive effect against adhesion of coelenterates, such as hydrozoas and obelia, and fail to show effects when used in a sea area where coelenterates occur frequently. The sea area where coelenterates occur frequently refers mostly to the coasts of Tohoku region and Hokkaido. In Tokai and West Japan sea areas, moreover, they only show weak adhesion preventive effects against shellfish and tubicolous polychaetes, thus failing to effectively prevent adhesion of these organisms.

It is known that copper is effective against shellfish, and copper type antifouling agents have been actually confirmed to be effective against shellfish and tubicolous polychaetes. However, the use of heavy metal copper in the copper antifouling agents is defectively associated with the exertion of a detrimental influence on the environment.

### Disclosure of the Invention

The present invention aims at providing a novel triphenylborane-rosin amine adduct that can be effectively used as an antifouling agent against aquatic adhesion organisms, such as an antifouling agent for fishnet and an antifouling coating, which shows superior antifouling effects against fouling organisms, such as coelenterates, shellfish, tubicolous polychaetes and the like, and a use thereof.

It is also an object of the present invention to provide a low polluting, heavy metal-free antifouling agent against aquatic adhesion organisms.

The present inventors have made intensive studies with the purpose of overcoming the above-mentioned various defects found in conventional antifouling agents against aquatic adhesion organisms, and now found a compound that is associated with less possibility of environmental pollution, and has superior antifouling effects against fouling organisms. That is, the present inventors have found that the novel triphenylborane-rosin amine adduct shows superior prevention of adhesion, and thus, antifouling effects against coelenterates such as hydrozoas and obelia, shellfish such as barnacle, blue mussel, oyster and Serpula, tubicolous polychaetes such as *Hydroides norvegica*, *Serpula vermicularis*, *Pomatoleios kraussii* and *Dexiospira spirillum*, and other aquatic organisms, which resulted in the completion of the present invention.

Accordingly, the present invention provides the following triphenylborane-rosin amine adducts and compositions containing them.
[1] A composition containing a triphenylborane-rosin amine adduct.
[2] The composition of above (1), comprising at least one member selected from the group consisting of a triphenylborane-dehydroabiethylamine adduct, a triphenylborane-dihydroabiethylamine adduct and a triphenylborane-tetrahydroabiethylamine adduct.
[3) A compound selected from the group consisting of a triphenylborane-dehydroabiethylamine adduct of the formula (1) 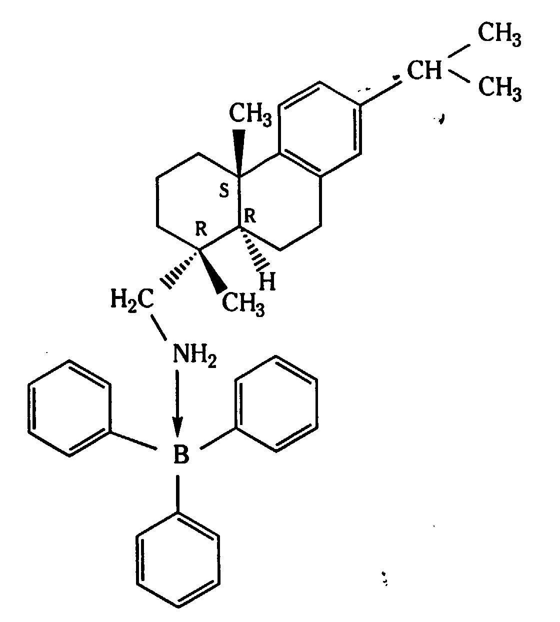 a triphenylborane-dihydroabiethylamine adduct of the formula (2) 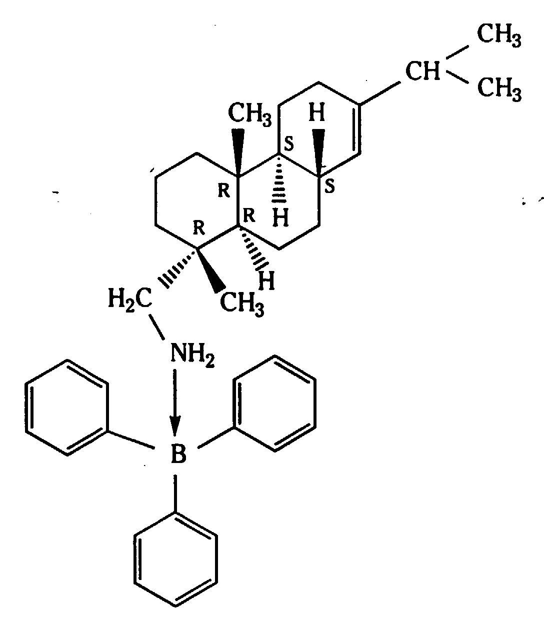 a triphenylborane-dihydroabiethylamine adduct of the formula (3) 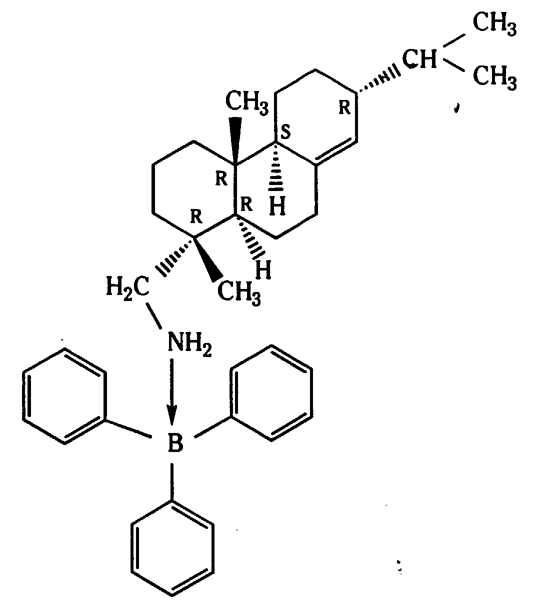 a triphenylborane-dihydroabiethylamine adduct of the formula (4) 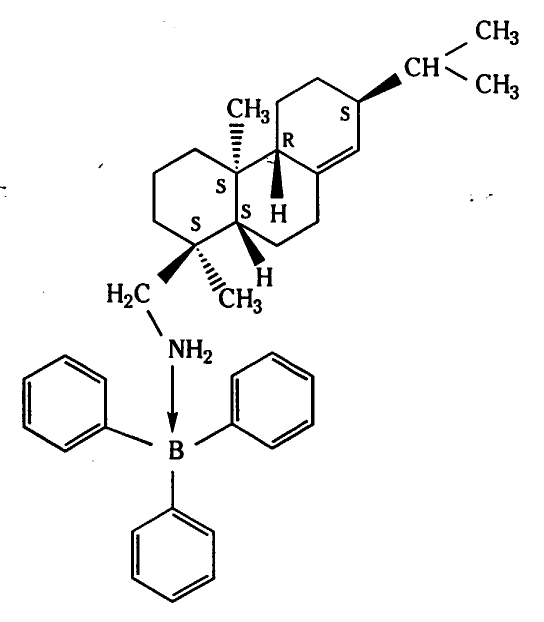 a triphenylborane-dihydroabiethylamine adduct of the formula (5) 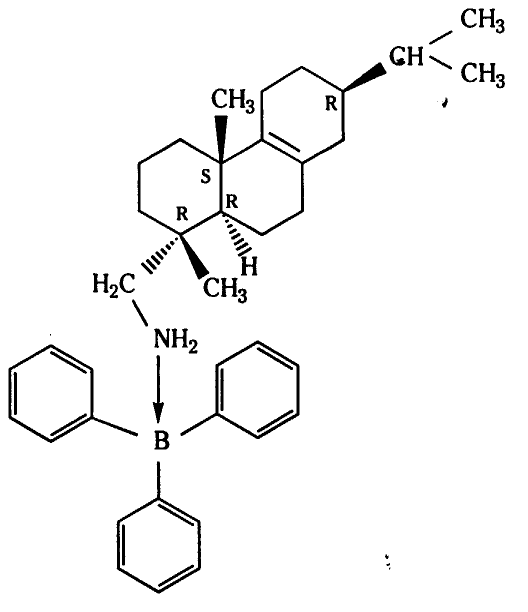 and a triphenylborane-dihydroabiethylamine adduct of the formula (6) 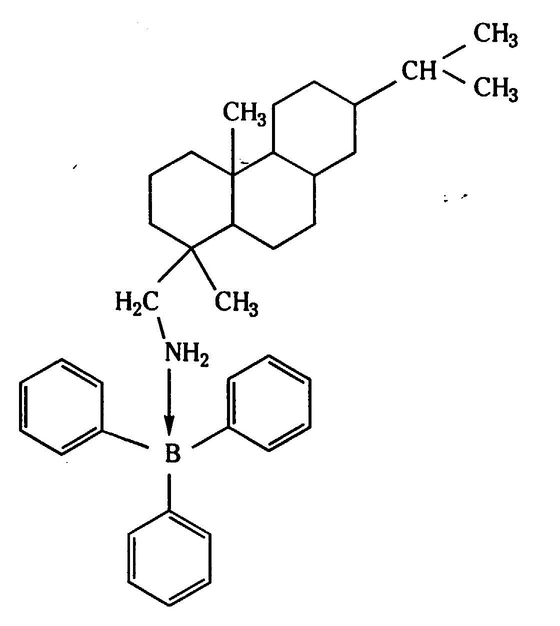
[4] A composition comprising at least one adduct selected from the group consisting of a triphenylborane-dehydroabiethylamine adduct of the formula (1) 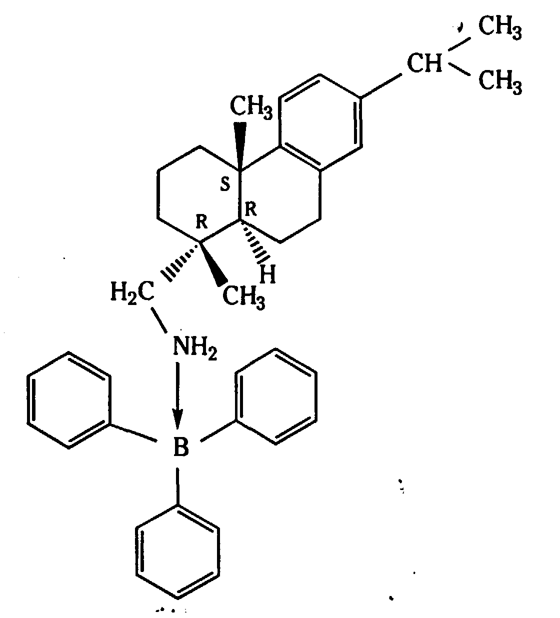 a triphenylborane-dihydroabiethylamine adduct of the formula (2) 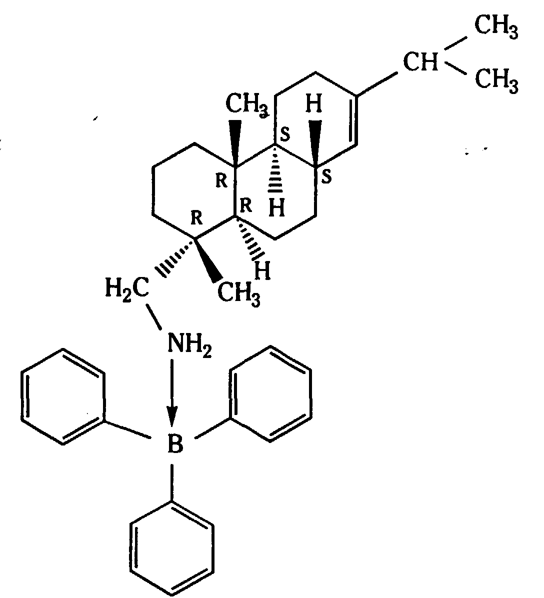 a triphenylborane-dihydroabiethylamine adduct of the formula (3) 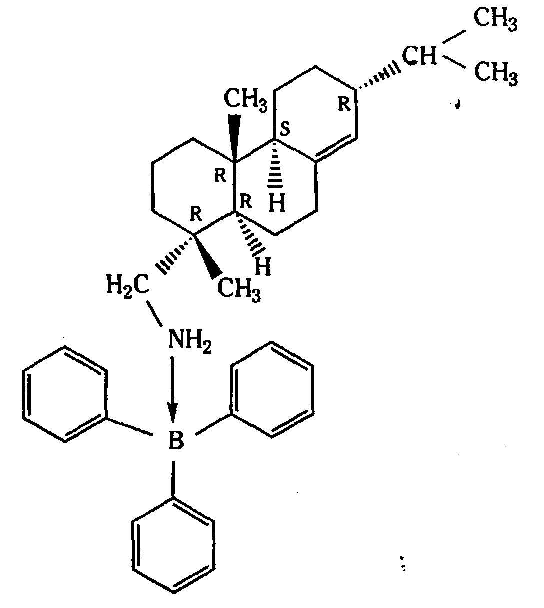 a triphenylborane-dihydroabiethylamine adduct of the formula (4) 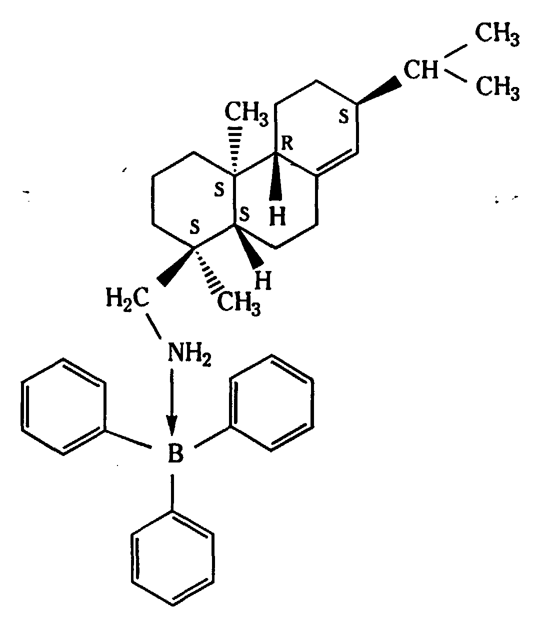 a triphenylborane-dihydroabiethylamine adduct of the formula (5) 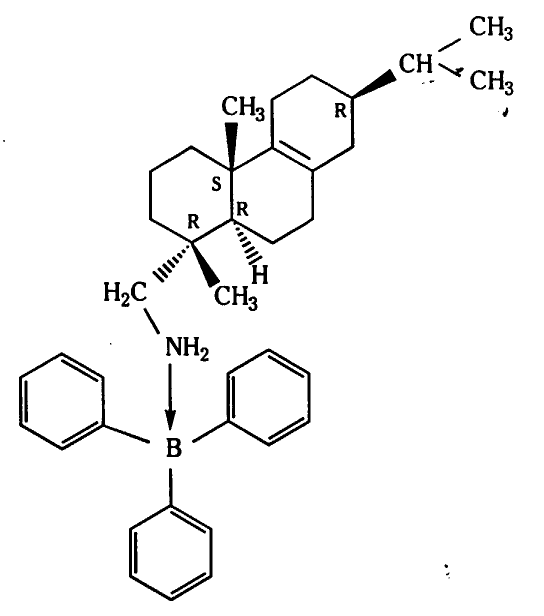 and a triphenylborane-tetrahydroabiethylamine adduct of the formula (6) 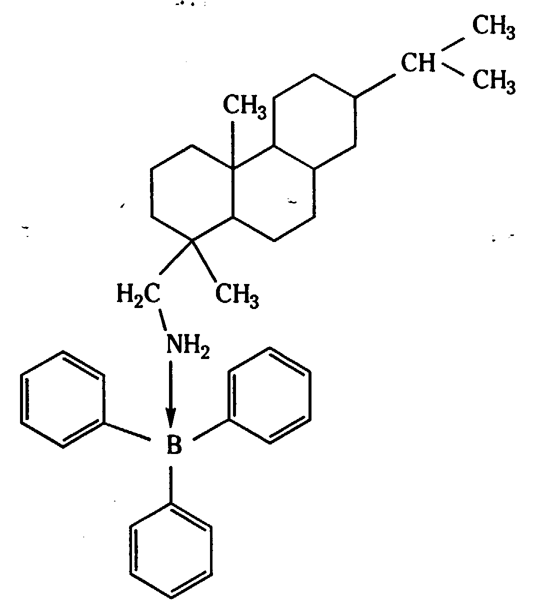
[5] A preventive of fouling due to aquatic adhesion organisms, which comprises a composition comprising a triphenylborane-rosin amine adduct.
[6] A preventive of fouling due to aquatic adhesion organisms, which comprises a composition comprising at least one adduct selected from the group consisting of a triphenylborane-dehydroabiethylamine adduct, a triphenylborane-dihydroabiethylamine adduct and a triphenylborane-tetrahydroabiethylamine adduct.
[7] A preventive of fouling due to aquatic adhesion organisms, which comprises a compound selected from the group consisting of a triphenylborane-dehydroabiethylamine adduct of the formula (1) 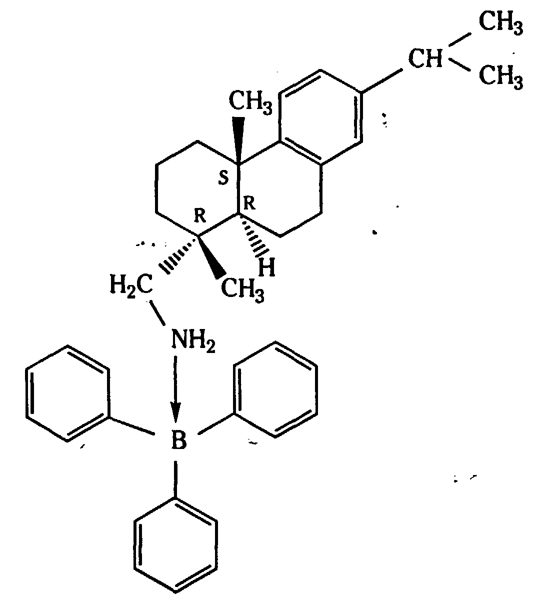 a triphenylborane-dihydroabiethylamine of the formula (2) 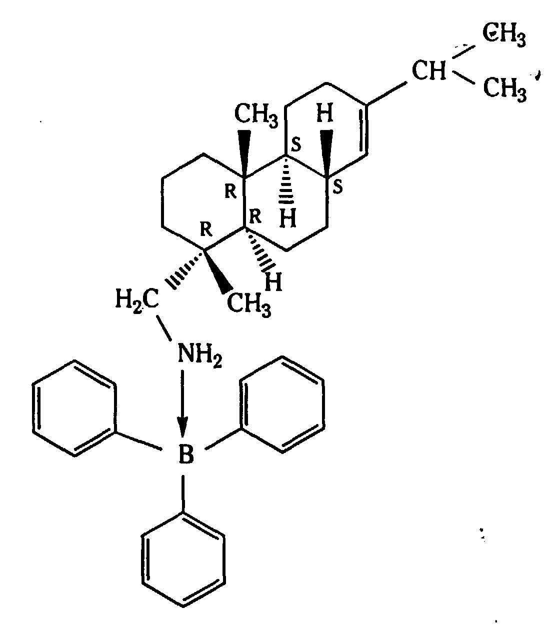 a triphenylborane-dihydroabiethylamine adduct of the formula (3) 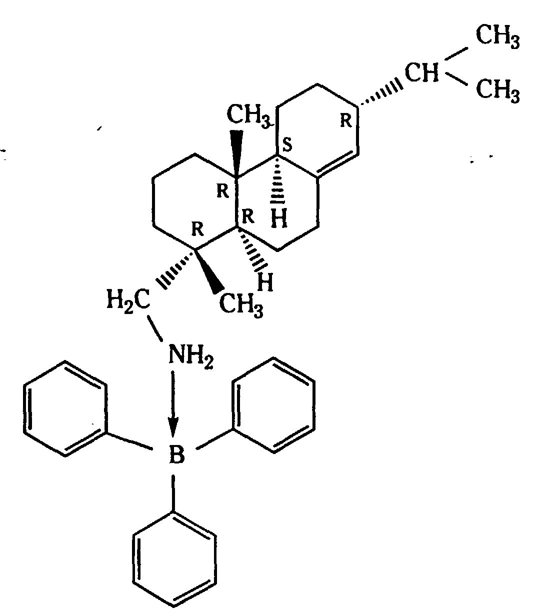 a triphenylborane-dihydroabiethylamine adduct of the formula (4) 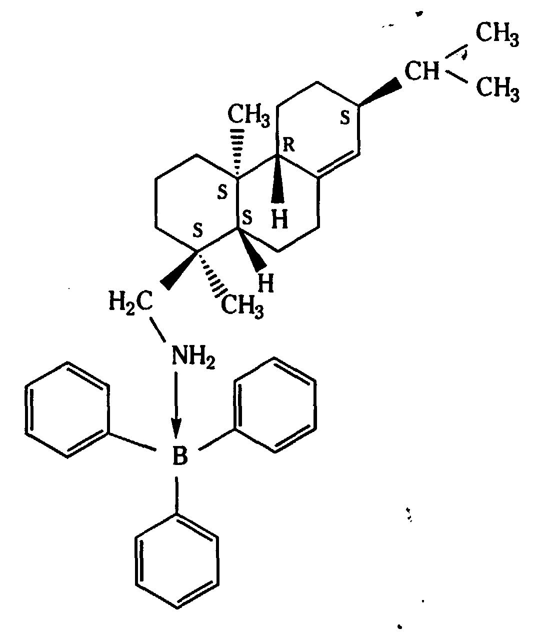 a triphenylborane-dihydroabiethylamine adduct of the formula (5) 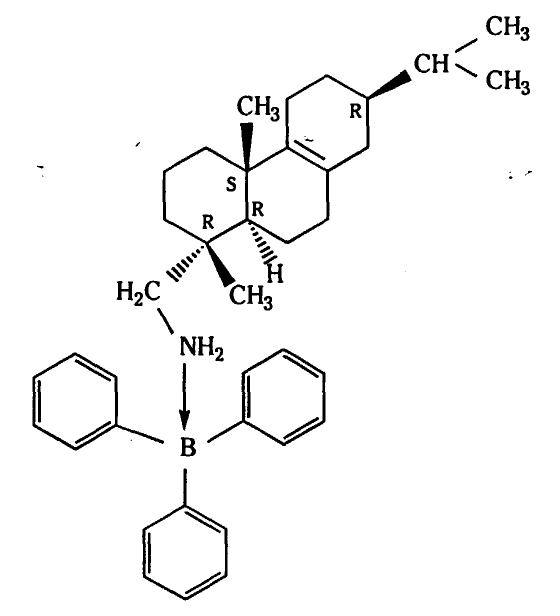 and a triphenylborane-tetrahydroabiethylamine adduct of the formula (6) 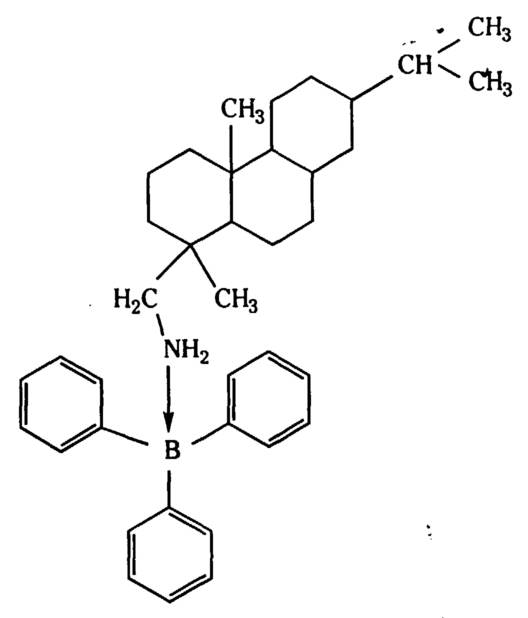
[8] A preventive of fouling due to aquatic adhesion organisms, which comprises a composition comprising at least one adduct selected from the group consisting of a triphenylborane-dehydroabiethylamine adduct of the formula (1) 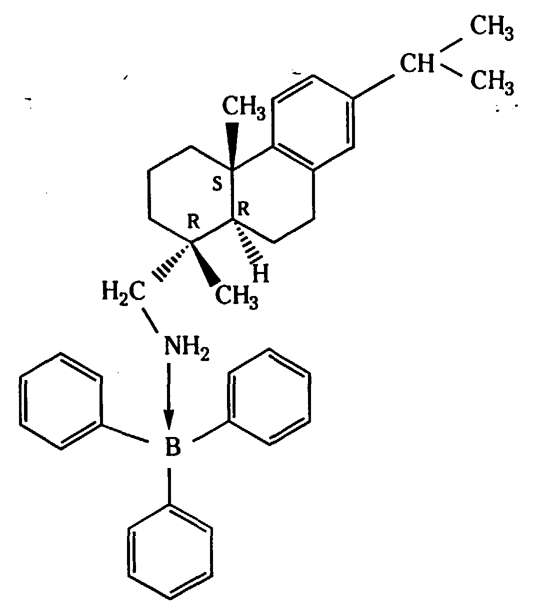 a triphenylborane-dihydroabiethylamine adduct of the formula (2) 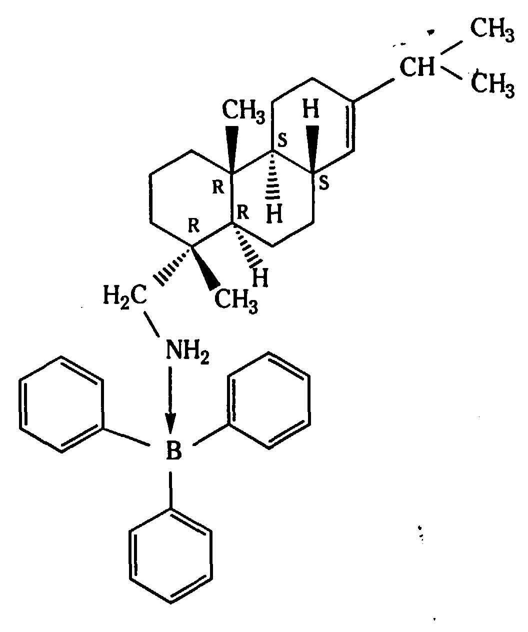 a triphenylborane-dihydroabiethylamine adduct of the formula (3) 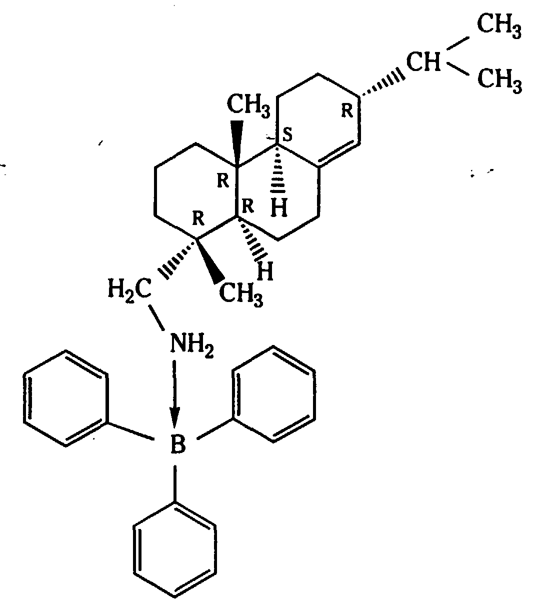 a triphenylborane-dihydroabiethylamine adduct of the formula (4) 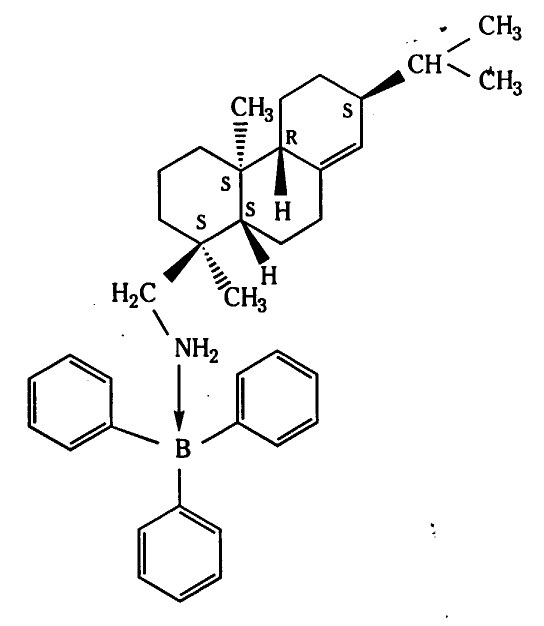 a triphenylborane-dihydroabiethylamine adduct of the formula (5) 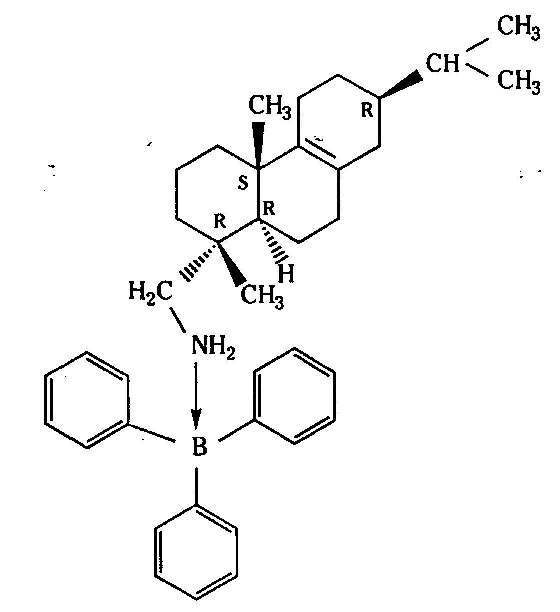 and a triphenylborane-tetrahydroabiethylamine adduct of the formula (6) 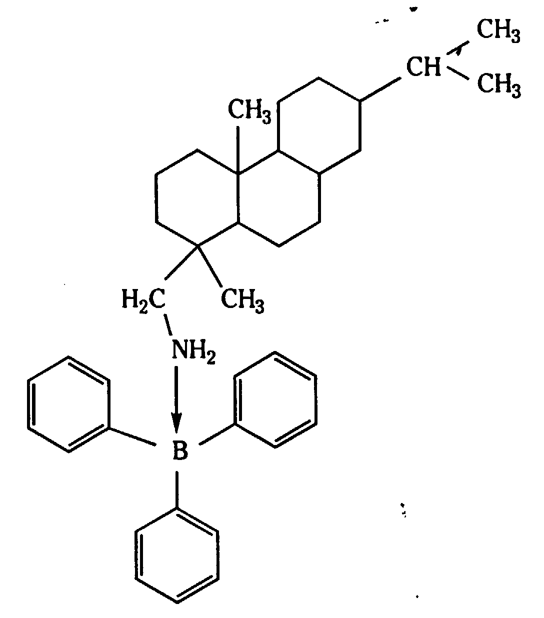
[9] An antifouling agent for a fishnet, which comprises a composition comprising a triphenylborane-rosin amine adduct.
[10] An antifouling agent for a fishnet, which comprises a composition comprising at least one adduct selected from the group consisting of a triphenylborane-dehydroabiethylamine adduct, a triphenylborane-dihydroabiethylamine adduct and a triphenylborane-tetrahydroabiethylamine adduct.
[11] An antifouling agent for a fishnet, which comprises a compound selected from the group consisting of a triphenylborane-dehydroabiethylamine adduct of the formula (1) 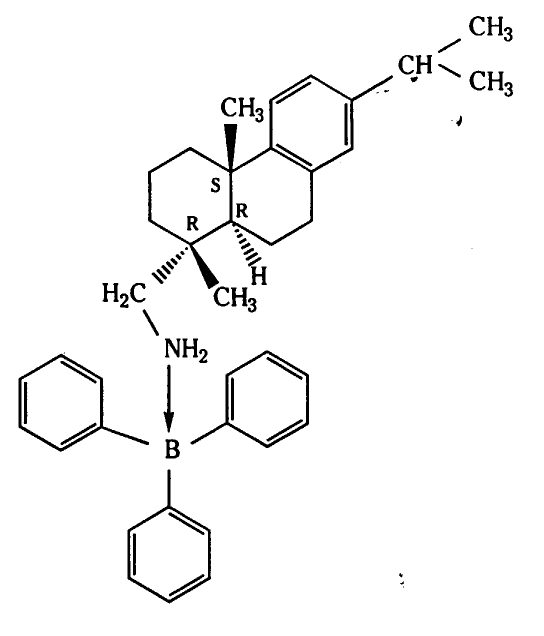 a triphenylborane-dihydroabiethylamine adduct of the formula (2) 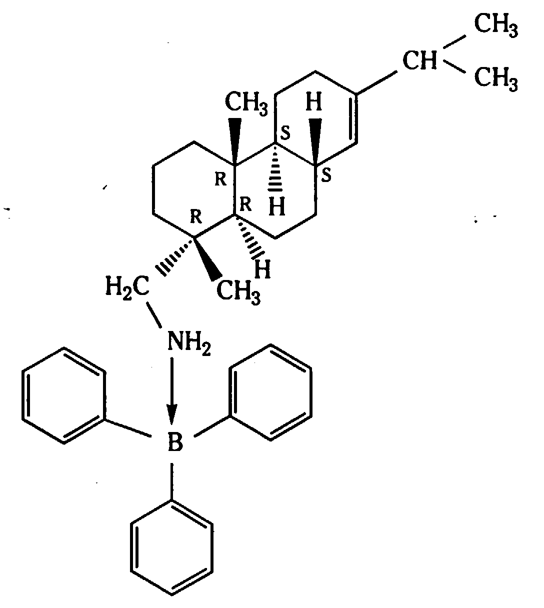 a triphenylborane-dihydroabiethylamine adduct of the formula (3) 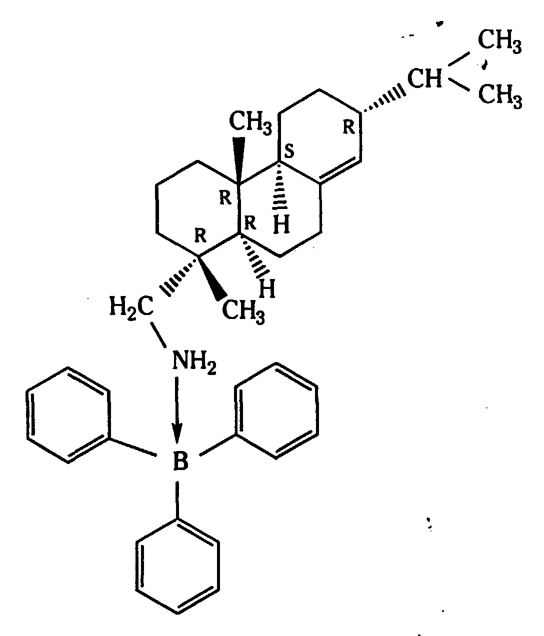 a triphenylborane-dihydroabiethylamine adduct of the formula (4) 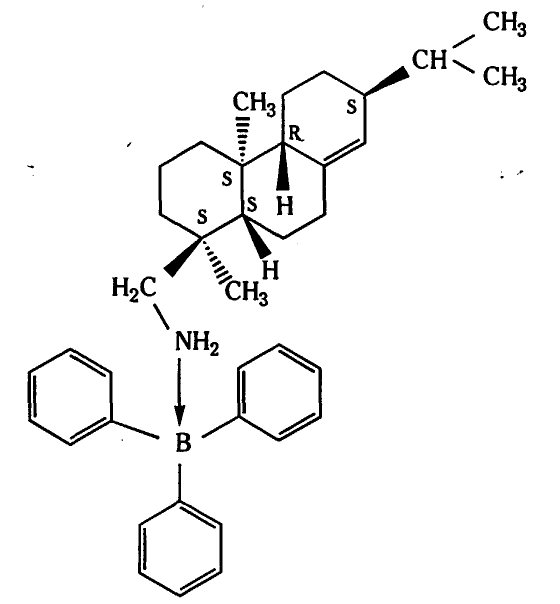 a triphenylborane-dihydroabiethylamine adduct of the formula (5) 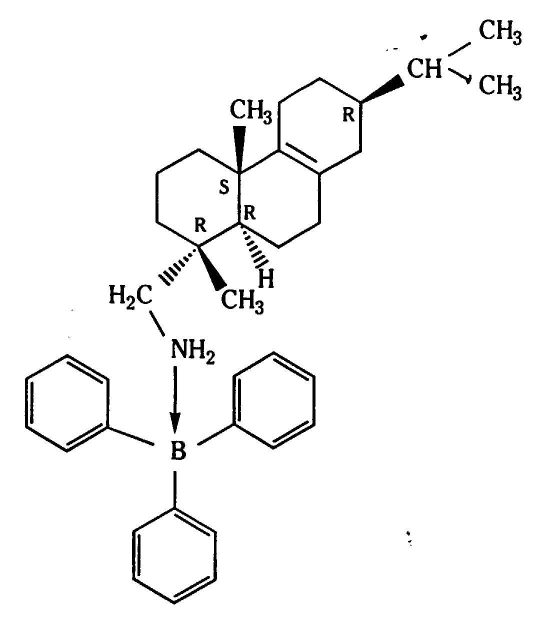 and a triphenylborane-tetrahydroabiethylamine adduct of the formula (6) 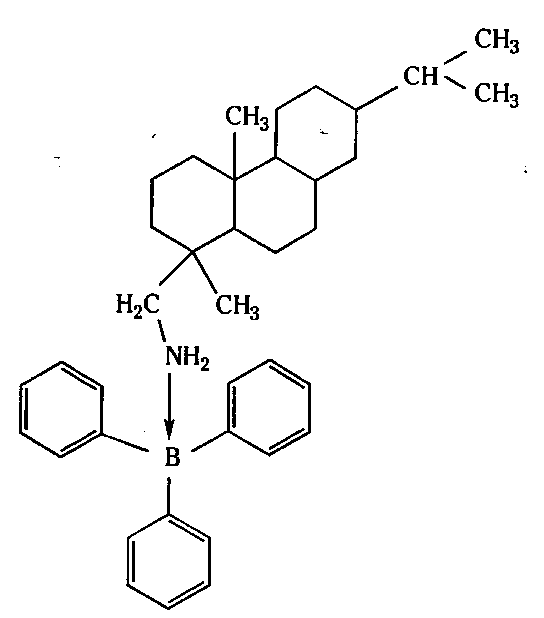
[12] An antifouling agent for a fishnet, which comprises a composition comprising an adduct selected from the group consisting of a triphenylborane-dehydroabiethylamine adduct of the formula (1) 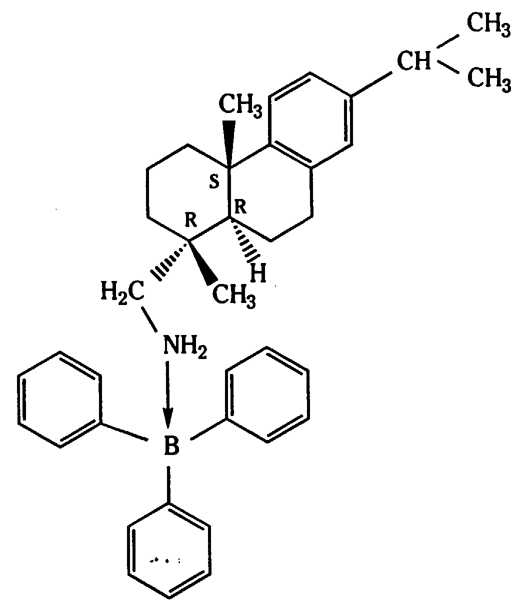 a triphenylborane-dihydroabiethylamine adduct of the formula (2) 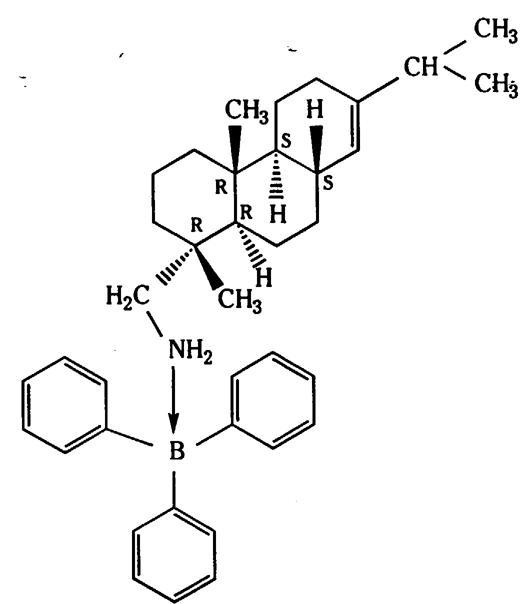 a triphenylborane-dihydroabiethylamine adduct of the formula (3) 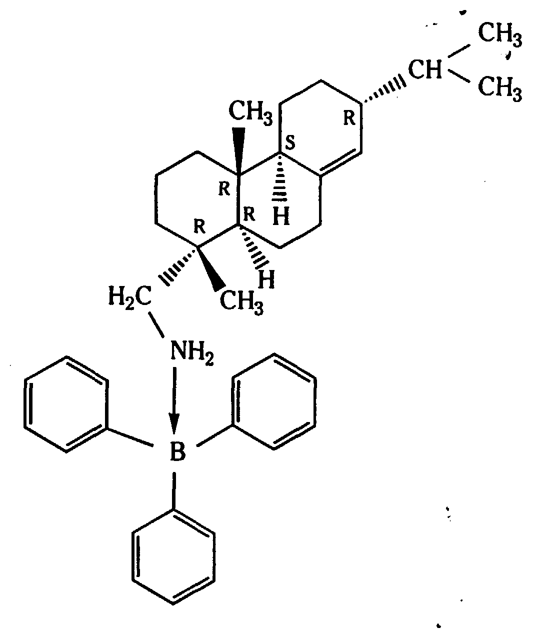 a triphenylborane-dihydroabiethylamine adduct of the formula (4) 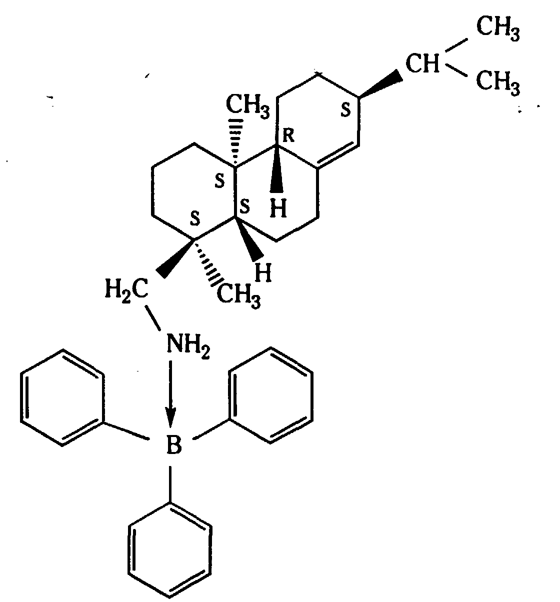 a triphenylborane-dihydroabiethylamine adduct of the formula (5) 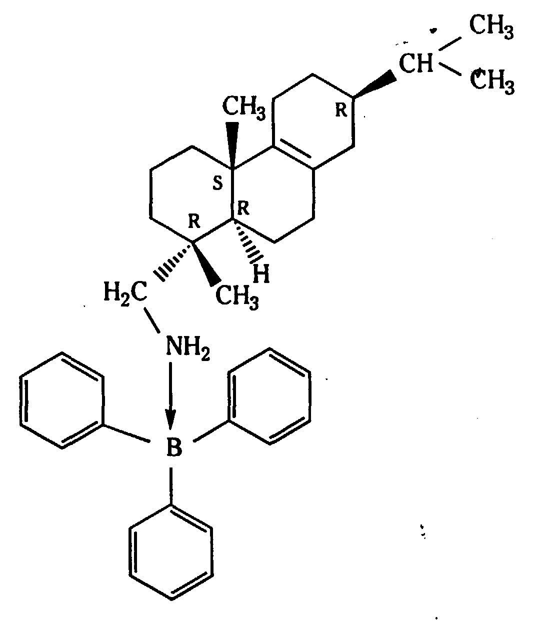 and a triphenylborane-tetrahydroabiethylamine adduct of the formula (6) 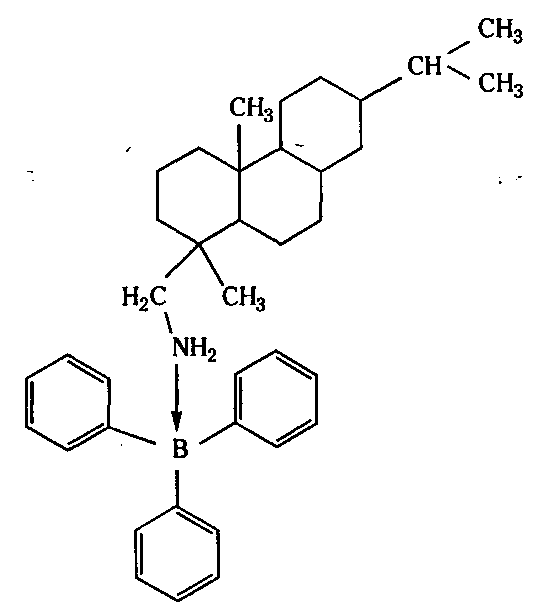
[13] An antifouling coating comprising a composition comprising a triphenylborane-rosin amine adduct.
[14] An antifouling coating comprising a composition comprising at least one adduct selected from the group consisting of a triphenylborane-dehydroabiethylamine adduct, a triphenylborane-dihydroabiethylamine adduct and a triphenylborane-tetrahydroabiethylamine adduct.
[15] An antifouling coating comprising a compound selected from the group consisting of a triphenylborane-dehydroabiethylamine adduct of the formula (1) 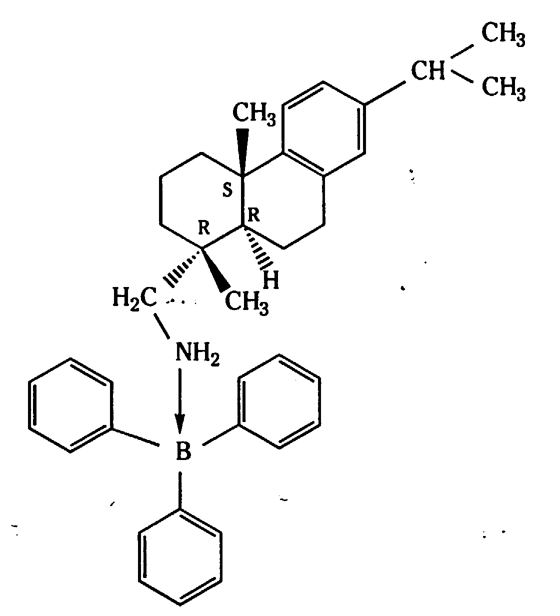 a triphenylborane-dihydroabiethylamine adduct of the formula (2) 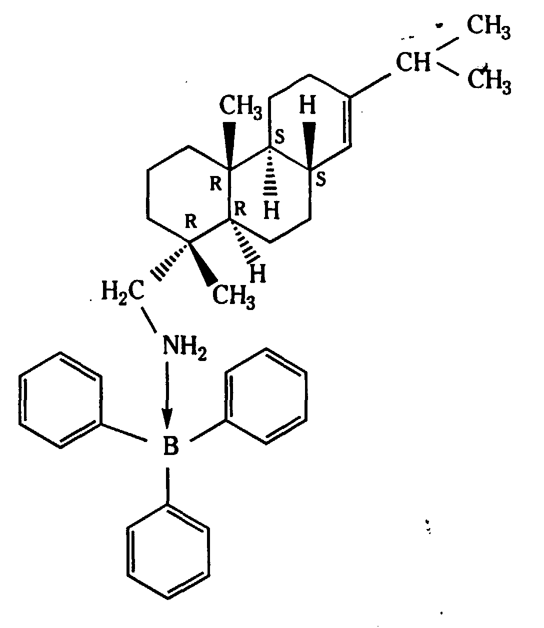 a triphenylborane-dihydroabiethylamine adduct of the formula (3) 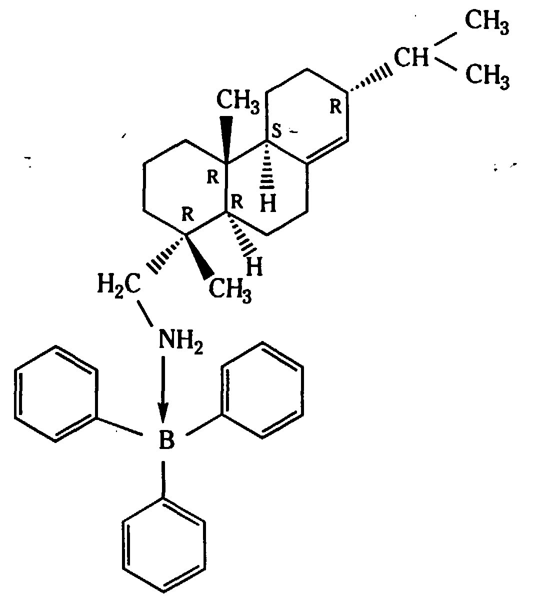 a triphenylborane-dihydroabiethylamine adduct of the formula (4) 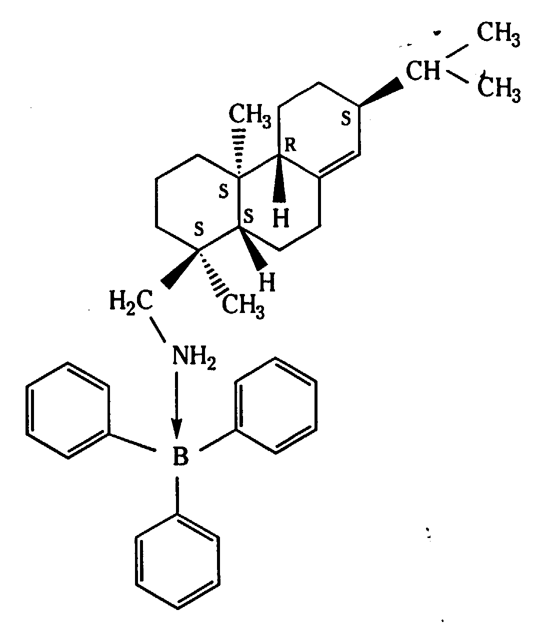 a triphenylborane-dihydroabiethylamine adduct of the formula (5) 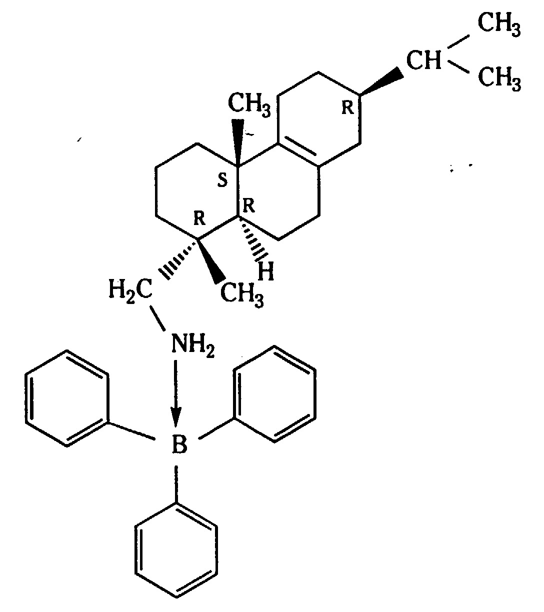 and a triphenylborane-tetrahydroabiethylamine adduct of the formula (6) 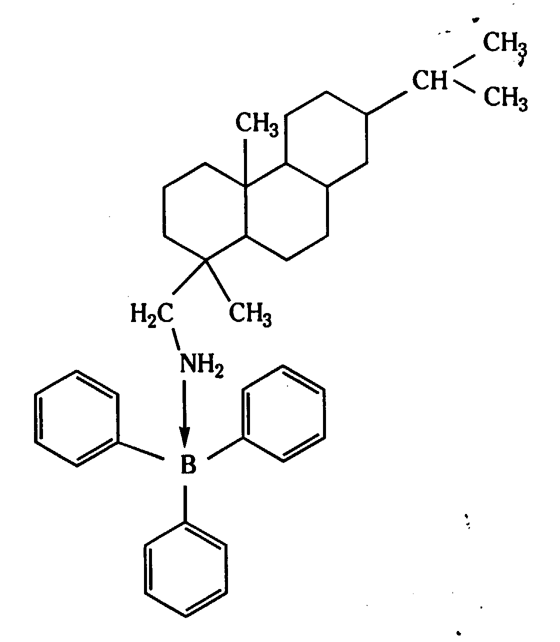
[16] An antifouling coating comprising a composition comprising at least one adduct selected from the group consisting of a triphenylborane-dehydroabiethylamine adduct of the formula (1) 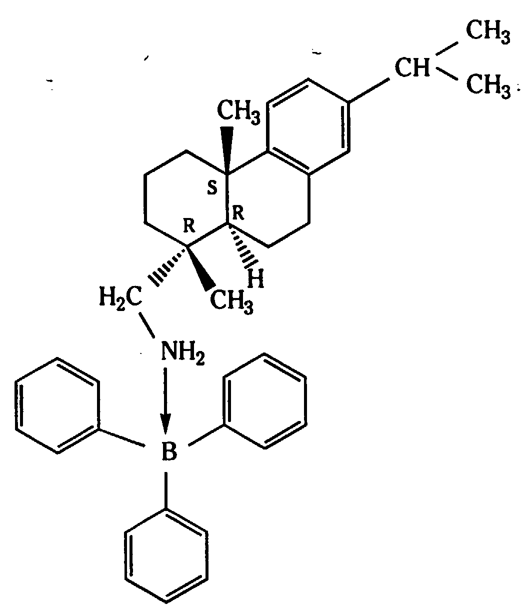 a triphenylborane-dihydroabiethylamine adduct of the formula (2) 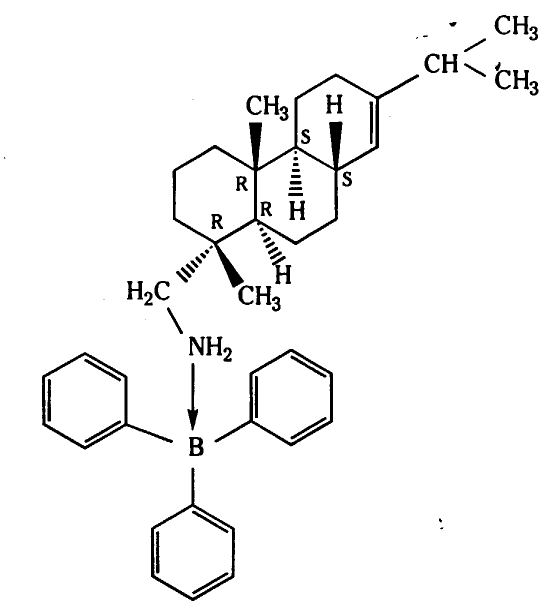 a triphenylborane-dihydroabiethylamine adduct of the formula (3) 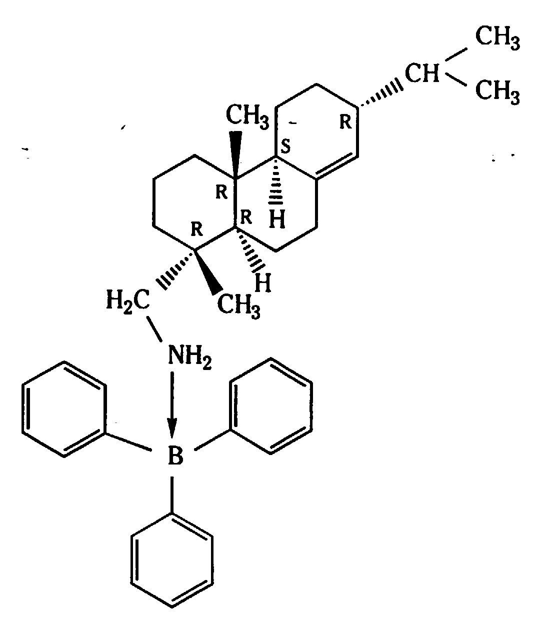 a triphenylborane-dihydroabiethylamine adduct of the formula (4) 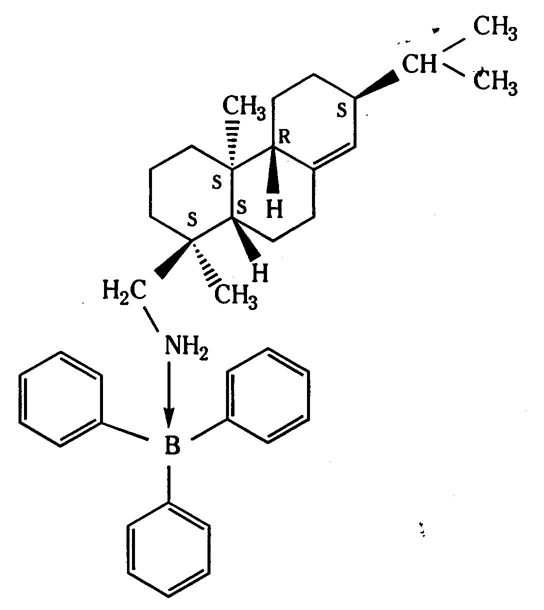 a triphenylborane-dihydroabiethylamine adduct of the formula (5) 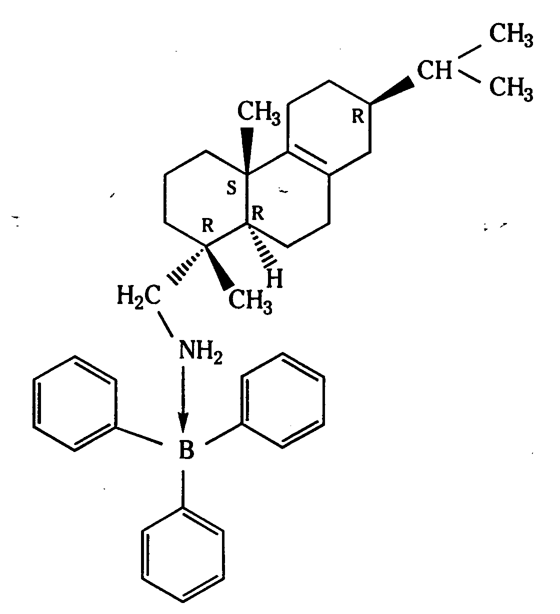 and a triphenylborane-tetrahydroabiethylamine adduct of the formula (6) 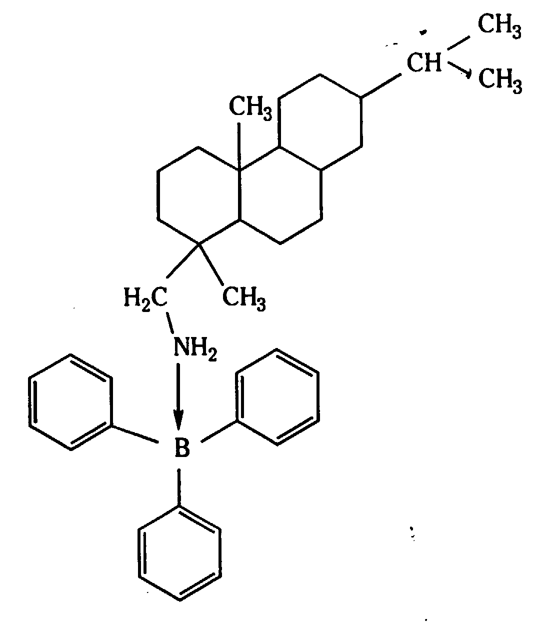
[17] The preventive of the above-mentioned [5], [6], [7] or [8], which comprises at least one compound selected from the group consisting of 1,3-dicyanotetrachlorobenzene, 2-(thiocyanomethylthio)benzothiazole, tetraalkylthiuram disulfide of the formula (8) 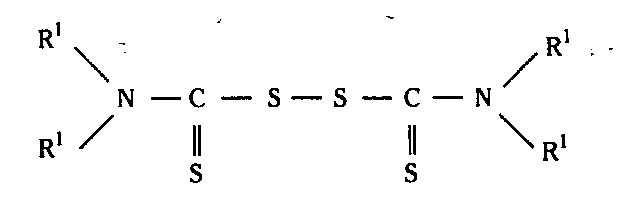 wherein each R¹ may be the same or different and is an alkyl having 1 to 4 carbon atoms, 2,3-dichloromaleimide of the formula (9) 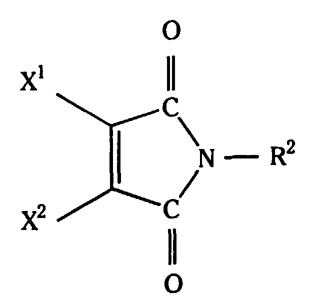 wherein R² is hydrogen, alkyl, halogen-substituted alkyl, cycloalkyl, phenyl, alkyl-substituted phenyl, halogen-substituted phenyl, benzyl, alkyl-substituted benzyl or halogen-substituted benzyl, and X¹ and X² are each chlorine atom, phenol of the formula (10) 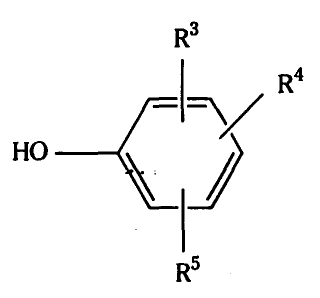 wherein R³, R⁴ and R⁵ may be the same or different and each is hydrogen, alkyl, halogen-substituted alkyl, cycloalkyl, phenyl, halogen, alkoxy, carbonyl, alkenyl or aralkyl, bis(2-pyridylthio-1-oxide)zinc, bis(2-pyridylthio-1-oxide)copper, 2-tert-butylamino-4-cyclopropylamino-6-methylthio-1,3,5-triazine and cuprous oxide, as an active ingredient.
[18] The antifouling agent of the above-mentioned [9], [10], [11] or [12], which comprises at least one compound selected from the group consisting of 1,3-dicyanotetrachlorobenzene, 2-(thiocyanomethylthio)benzothiazole, tetraalkylthiuramdisulfide of the formula (8) 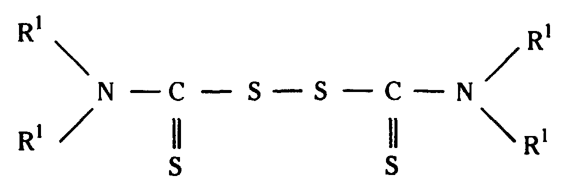 wherein each R¹ may be the same of different and is alkyl having 1 to 4 carbon atoms, 2,3-dichloromaleimide of the formula (9) 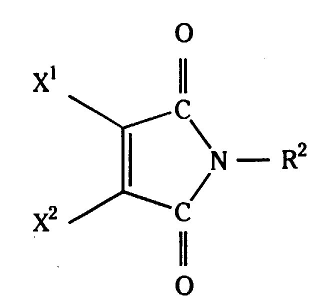 wherein R² is hydrogen, alkyl, halogen-substituted alkyl, cycloalkyl, phenyl, alkyl-substituted phenyl, halogen-substituted phenyl, benzyl, alkyl-substituted benzyl or halogen-substituted benzyl, and X¹ and X² are each chlorine atom, and phenol of the formula (10) 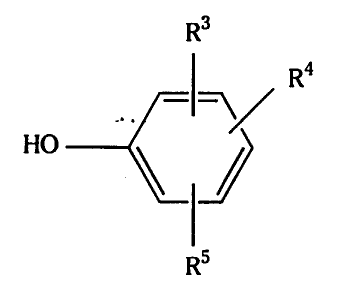 wherein R³, R⁴ and R⁵ may be the same or different and each is hydrogen, alkyl, halogen-substituted alkyl, cycloalkyl, phenyl, halogen, alkoxy, carbonyl, alkenyl or aralkyl.
[19] The antifouling coating of the above [13], [14], [15] or [16], which further comprises, as an active ingredient, at least one compound selected from the group consisting of 1,3-dicyanotetrachlorobenzene, 2-(thiocyanomethylthio)benzothiazole, tetraalkylthiuramdisulfide of the formula (8) 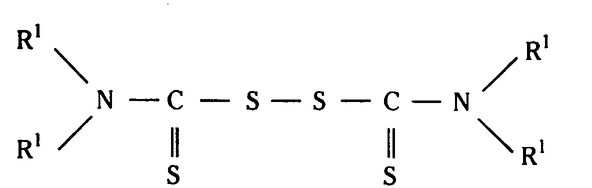 wherein each R¹ may be the same of different and is alkyl having 1 to 4 carbon atoms, 2,3-dichloromaleimide of the formula (9) 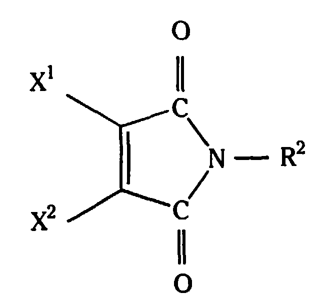 wherein R² is hydrogen, alkyl, halogen-substituted alkyl, cycloalkyl, phenyl, alkyl-substituted phenyl, halogen-substituted phenyl, benzyl, alkyl-substituted benzyl or halogen-substituted benzyl, and X¹ and X² are each chlorine atom, phenol of the formula (10) 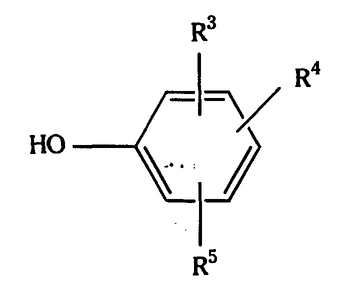 wherein R³, R⁴ and R⁵ may be the same or different and each is hydrogen, alkyl, halogen-substituted alkyl, cycloalkyl, phenyl, halogen, alkoxy, carbonyl, alkenyl or aralkyl, bis(2-pyridylthio-1-oxide)zinc, bis(2-pyridylthio-1-oxide)copper, 2-tert-butylamino-4-cyclopropylamino-6-methylthio-1,3,5-triazine and cuprous oxide.
[20] The preventive of the above [5], [6], [7] [8] or [17], which comprises at least one compound selected from the group consisting of dialkylpolysulfide of the formula (11)

   R⁶ ― (S)ₘ ― R⁶

   wherein each R⁶ is alkyl having 1 to 20 carbon atoms and m is an integer of 2 to 10, polybutene having an average molecular weight of 200-1,000, paraffin and petrolatum, as an elution-adjusting agent.
[21] The antifouling agent of the above [9], [10], [11], [12] or [18], which comprises at least one compound selected from the group consisting of dialkylpolysulfide of the formula (11)

   R⁶ ― (S)ₘ ― R⁶

   wherein each R⁶ is alkyl having 1 to 20 carbon atoms and m is an integer of 2 to 10, polybutene having an average molecular weight of 200-1,000, paraffin and petrolatum, as an elution-adjusting agent.
[22] The antifouling coating of the above [13], [14], [15], [16] or [19], which comprises at least one compound selected from the group consisting of dialkylpolysulfide of the formula (11)

   R⁶ ― (S)ₘ ― R⁶

   wherein each R⁶ is alkyl having 1 to 20 carbon atoms and m is an integer of 2 to 10, polybutene having an average molecular weight of 200-1,000, paraffin and petrolatum, as an elution-adjusting agent.

In the present invention, triphenylborane-rosin amine adduct, triphenylborane-dehydroabiethylamine adduct, triphenylborane-dihydroabiethylamine adduct, triphenylborane-tetrahydroabiethylamine adduct, compound of the formula (1), compound of the formula (2), compound of the formula (3), compound of the formula (4), compound of the formula (5), compound of the formula (6) and mixtures thereof are generally referred to as "compounds and mixtures of the present invention".

The compounds and the mixtures of the present invention can be synthesized by the method shown by the following formulas.

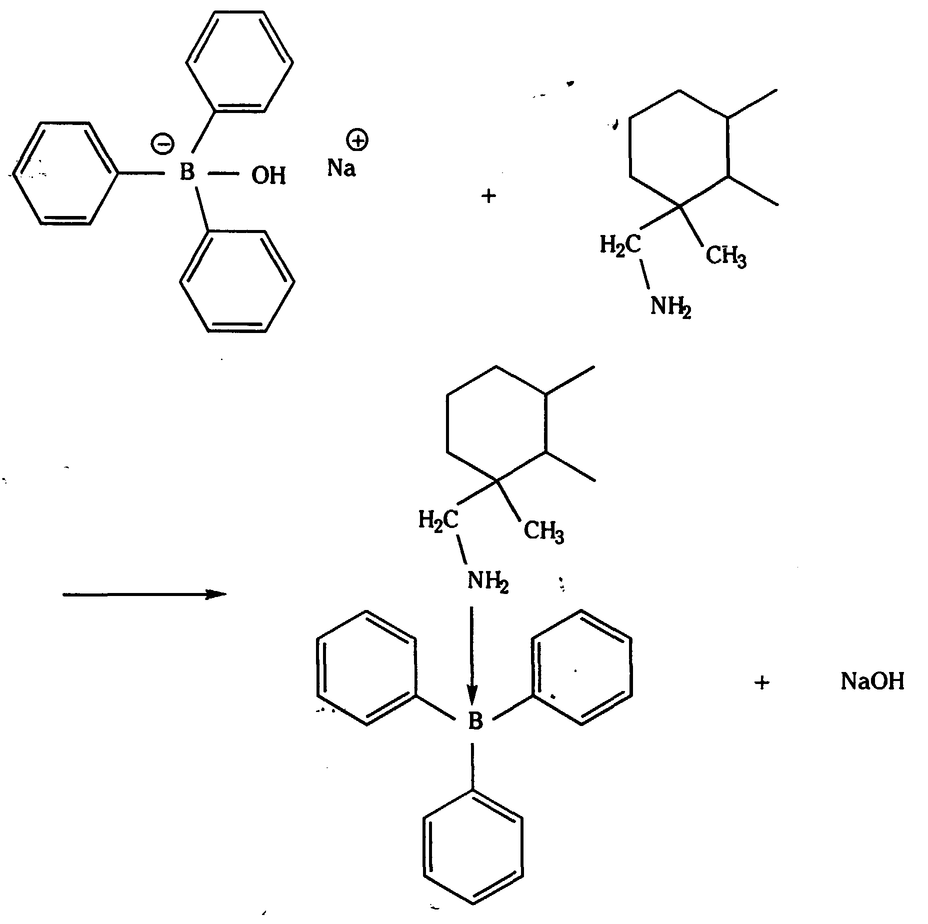

To be specific, sodium hydroxide adduct of triphenylborane and rosin amine are reacted in an aqueous solution to synthesize the compounds and mixtures of the present invention. The reaction temperature may be room temperature, but may be raised to 80°C where necessary. The reaction time is from 2 hr to 20 hr.

The rosin amine may be a commercially available one (e.g., Dehydroabietylamine; Tokyo Kasei Kogyo Co., Ltd., rosin amine D; manufactured by YAMASO CHEMICAL Co., Ltd., or the like. Alternatively, those obtained by known reactions of rosins, such as gum rosin which is obtained by slashing the trunk of a pine tree to get raw pine gum and distilling the gum with vapor to remove Turpentine oil, wood rosin obtained by chipping the root of a pine tree cut down more than dozen years ago, extracting the chips with a solvent and distilling same to remove Turpentine oil, or tall oil rosin obtained by distilling, under reduced pressure in a precise distilling tower, a crude tall oil by-produced during pulping a pine lumber by a craft method, may be used.

The sodium hydroxide adduct of triphenylborane may be a commercially available one, or it may be produced by reacting triphenylborane and sodium hydroxide.

The thus obtained adduct is insoluble in water and instantaneously separated. The separated adduct is collected by filtration and washed with water. Then, it is dissolved in an organic solvent such as toluene and xylene, and washed with water. The organic layer is dried over anhydrous magnesium sulfate, and the solvent is evaporated under reduced pressure to give a candy-like complex compound without a crystalline form.

The compounds and the mixtures of the present invention thus obtained can be used as a preventive of fouling due to aquatic adhesion organisms, an antifouling agent for a fishnet, an antifouling coating to be applied to the bottom of a ship, and the like.

The content of the compounds and the mixtures of the present invention can be altered according to the conditions under which they are used, such as the environment in which the antifouling agent is used for a fishnet. It is generally from 1 wt% to 25 wt%, preferably from 3 wt% to 15 wt%, of an antifouling composition in the case of an antifouling agent for a fishnet and from 0.1 wt% to 60 wt%, preferably from 1 wt% to 40 wt%, of an antifouling coating.

When the compounds and the mixtures of the present invention are used as, for example, an antifouling agent for a fishnet, the following different active ingredient and various resins, such as acrylic resin, synthetic rubber, rosin, silicon resin and polybutene resin, are added as necessary to the compounds and mixtures of the present invention. Where necessary, moreover, an agent for adjusting the elution of an active ingredient is added, and the mixture is dissolved in an organic solvent such as xylene.

When they are used as an antifouling coating to be applied to the bottom of a ship, the coating may comprise the compounds and mixtures of the present invention, and when necessary, a different active ingredient, a resin used for an antifouling agent for a fishnet, other components generally used for a coating, organic or inorganic solvent (e.g., xylene, methyl isobutyl ketone, butyl acetate etc.), and additives such as pigment exemplified by coloring pigment and extender pigment (e.g., red iron oxide, titanium oxide and zinc oxide), plasticizer, filler (e.g., talc and fine silica) and curing promoter.

The compound to be added to the compounds and mixtures of the present invention as necessary, which has an antifouling effect, is exemplified by the following.
● 1,3-Dicyanotetrachlorobenzene, 2-(thiocyanomethylthio)benzothiazole, tetraalkylthiuramdisulfide of the formula (8) 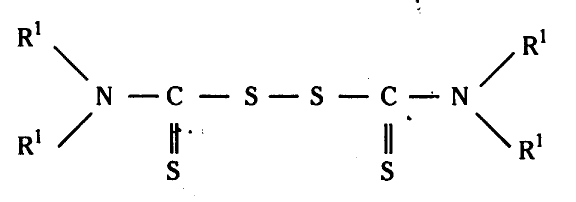 wherein each R¹ is alkyl having 1 to 4 carbon atoms, which is preferably methyl, ethyl, propyl, isopropyl or butyl, wherein tetraalkylthiuramdisulfide of the formula (8) is specifically exemplified by tetramethylthiuramdisulfide, tetraethylthiuramdisulfide, tetraisopropylthiuramdisulfide, tetra-n-butylthiuramdisulfide and the like.
● 2,3-Dichloromaleimide of the formula (9) 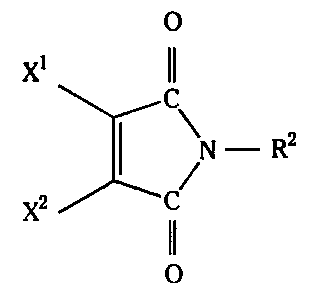 wherein R² is hydrogen, alkyl, halogen-substituted alkyl, cycloalkyl, phenyl, wherein R² is hydrogen, alkyl, halogen-substituted alkyl, cycloalkyl, phenyl, alkyl-substituted phenyl, halogen-substituted phenyl, benzyl, alkyl-substituted benzyl or halogen-substituted benzyl, and X¹ and X² are each chlorine atom.
   Alkyl at R² is preferably alkyl having 1 to 18 carbon atoms, such as methyl, ethyl, isopropyl, butyl, tert-butyl, octyl, dodecyl, tetradecyl, hexadecyl and octadecyl. Examples of halogen-substituted alkyl include dichloromethyl, dichloroethyl, trichloroethyl and the like. Examples of cycloalkyl include cyclohexyl. Examples of alkyl-substituted phenyl include dimethylphenyl, diethylphenyl, methylethylphenyl and the like. Halogen-substituted phenyl is exemplified by dichlorophenyl and the like. The alkyl-substituted benzyl is exemplified by methylbenzyl, dimethylbenzyl, diethylbenzyl, α-methylbenzyl and the like. Halogen-substituted benzyl is exemplified by chlorobenzyl, dichlorobenzyl and the like. The 2,3-dichloromaleimide (9) includes, for example 2,3-dichloro-N-ethylmaleimide, 2,3-dichloro-N-isopropylmaleimide, 2,3-dichloro-N-n-butylmaleimide, 2,3-dichloro-N-tert-butylmaleimide, 2,3-dichloro-N-n-octylmaleimide, 2,3-dichloro-N-cyclohexylmaleimide, 2,3-dichloro-N-benzylmaleimide, 2,3-dichloro-N-(2-chlorobenzyl)maleimide, 2,3-dichloro-N-(4-chlorobenzyl)maleimide, 2,3-dichloro-N-(2-methylbenzyl)maleimide, 2,3-dichloro-N-(2,4-dimethylbenzyl)maleimide, 2,3-dichloro-N-(3,4-dimethylbenzyl)maleimide, 2,3-dichloro-N-α-methylbenzylmaleimide, 2,3-dichloro-N-(2,4-dichlorobenzyl)maleimide, 2,3-dichloro-N-(2-ethyl-6-methylphenyl)maleimide, 2,3-dichloro-N-(2,6-dimethylphenyl)maleimide, 2,3-dichloro-N-(2,6-diethylphenyl)maleimide, 2,3-dichloro-N-(2,4-diethylphenyl)maleimide, 2,3-dichloro-N-(2,4,6-trimethylphenyl)maleimide and the like.
● Phenol of the formula (10) 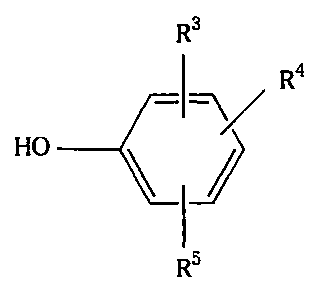 wherein R³, R⁴ and R⁵ may be the same or different and each is hydrogen, alkyl, halogen-substituted alkyl, cycloalkyl, phenyl, halogen, alkoxy, carbonyl, alkenyl or aralkyl.
   Alkyl at R³, R⁴ and R⁵ is exemplified by alkyl having 1 to 9 carbon atoms, such as methyl, ethyl, isopropyl, butyl, tert-butyl and nonyl. Halogen-substituted alkyl is exemplified by dichloromethyl, dichloroethyl and trichloroethyl. Examples of cycloalkyl include cyclohexyl and the like. Halogen is exemplified by fluorine atom, chlorine atom, bromine atom and iodine atom. Alkoxy is exemplified by those having 1 to 4 carbon atoms, such as methoxy, ethoxy and propoxy. Alkenyl is exemplified by alkyl having 2 to 4 carbon atoms, such as vinyl, allyl and isopropenyl. Aralkyl may be, for example, one having 7 to 9 carbon atoms, such as benzyl and cumyl.

Examples of phenol (10) include nonylphenol, cumyl phenol, 4,6-di-tert-butyl-m-cresol, 1-cyclohexyl-5-methylphenol, 2,6-di-tert-butyl-p-cresol, 2-phenylphenol, 2-butyl-6-ethyl-4-isopropylphenol, 2-bromo-6-chloro-4-dichloromethylphenol, 2-fluoro-4-iodo-3-trichloroethylphenol, 3-hydroxy-5-methoxybenzoic acid, 4-ethoxy-2-vinylphenol and the like.

When in use as an antifouling coating for the bottom of a ship, the known antifouling component to be added may be, for example, bis(2-pyridylthio-1-oxide)zinc, bis(2-pyridylthio-1-oxide)copper, 2-tert-butylamino-4-cyclopropylamino-6-methylthio-1,3,5-triazine, cuprous oxide, copper thiocyanate (CuSCN), alkyl acrylate-methyl methacrylate-tributyltin methacrylate terpolymer, tetraethylthiuramdisulfide, zinc dimethyldithiocarbamate, zinc bis(dimethyldithiocarbamoyl)ethylenebisdithiocarbamate, pyridine-triphenylborane, copper rhodanide, copper hydroxide, copper naphthenate, manganese ethylene-bis(dithiocarbamate), zinc ethylene-bis(dithiocarbamate), N,N-dimethyldichlorophenylurea, 4,5-dichloro-2-n-octyl-3-isothiazolone, N-(fluorodichloromethylthio)phthalimide, N,N'-dimethyl-N'-phenyl-(N-fluorodichloromethylthio)sulfamide, 3-iodo-2-propynylbutyl carbamate, diiodomethyl-p-tolyl sulfone, 2-(4-thiazolyl)-benzoimidazole, and other non-tin type antifouling compounds. Particularly preferred are bis(2-pyridylthio-1-type antifouling compounds. Particularly preferred are bis(2-pyridylthio-1-oxide)zinc, bis(2-pyridylthio-1-oxide)copper, 2-tert-butylamino-4-cyclopropylamino-6-methylthio-1,3,5-triazine and cuprous oxide.

The known antifouling ingredients recited above can be used alone or in combination.

The weight ratio of these known antifouling ingredients to the compound or mixture of the present invention is 1:10 - 10:1.

Moreover, the preventive of fouling by the aquatic adhesion organisms, the antifouling agent for a fishnet and the antifouling coating of the present invention can contain an elution adjusting agent.

Examples of the elution-adjusting agent include dialkylpolysulfide of the formula (11)

R⁶ ― (S)ₘ ― R⁶

wherein each R⁶ is alkyl having 1 to 20 carbon atoms and m is an integer of 2 to 10.

The alkyl at R⁶ is preferably those having 2 to 19 carbon atoms, such as ethyl, propyl, tert-butyl, tert-amyl, tert-nonyl, tert-dodecyl and nonadecyl.

Examples of dialkylpolysulfide (11) include diethylpentasulfide, dipropyltetrasulfide, di-tert-butyldisulfide, di-tert-butyltetrasulfide, di-tert-amyltetrasulfide, di-tert-nonylpentasulfide, di-tert-dodecylpentasulfide, dinonadecyltetrasulfide and the like.

In addition, polybutene having an average molecular weight of 200-1,000, paraffins and petrolatum can be used as an elution-adjusting agent.

The polybutene having an average molecular weight of 200-1,000 is exemplified by LV-5, LV-10, LV-25, +V-50.+V-100, HV-15, HV-35, HV-50, HV-100, HV-300 and the like manufactured by NIPPON OIL COMPANY, LTD. Examples of the paraffin include liquid paraffin, paraffin wax, chlorinated paraffin and the like, and examples of the petrolatum include white petrolatum, yellow petrolatum and the like. These elution-adjusting agents can be used alone or in combination.

The elution-adjusting agent content of the composition can be optionally changed depending on the use conditions, which is generally 3-20 wt%, preferably 5-10 wt%.

The preventive of the fouling by the aquatic adhesion organisms, antifouling agent for a fishnet and antifouling coating of the present invention may contain a resin. Examples of the resin include, but not limited to, rosin resin, acrylic resin, polybutene resin, chlorinated rubber resin, vinyl chloride resin, alkyd resin, Cumarone resin, ethylene-vinyl acetate resin and the like. These can be used alone or in combination.

In the case of a soluble type antifouling coating, the resin to be used in the antifouling coating to be applied to the bottom of a ship may be a water soluble resin. The water soluble resin may be a polymer or copolymer having a functional group capable of imparting water soluble property, such as a group of acid and salt of carboxyl and sulfonic acid, ester, hydroxyl, primary to tertiary amino, quaternary ammonium salt, poly(alkylene oxide) adduct, or a compound capable of converting to a water soluble compound by hydrolysis, such as trialkylated tin methacrylate copolymer, which may be used alone or in combination.

In the case of an insoluble type antifouling coating, the resin to be used in the antifouling coating to be applied to the bottom of a ship may be a water insoluble resin. The water insoluble resin may be those generally used as a component of a coating composition, such as alkyd resin, natural rubber, chlorinated natural rubber, vinyl chloride, vinyl chloride-vinyl acetate copolymer, vinyl chloride-vinyl isobutyl ether copolymer, chlorinated rubber resin, chlorinated polyethylene resin, chlorinated polypropylene resin, acrylic resin, styrene-butadiene resin, polyester resin, epoxy resin, phenol resin, synthetic rubber, silicone rubber, silicone resin, petroleum resin, oil resin, rosin ester resin, rosin soap, resin, polyamide resin and the like. In addition, the above-mentioned polymer and copolymer having a functional group capable of imparting the water soluble property, which are used as soluble type matrix components, and a compound capable of converting to a water soluble compound by hydrolysis, can be used. A typical example thereof is rosin. adhesion organisms, antifouling agent for a fishnet and antifouling coating of the present invention may be an aromatic compound type organic solvent, ketone compound type organic solvent or aliphatic compound type organic solvent. Examples of such solvent include xylene, toluene, pseudocumene, diethylbenzene, triethylbenzene, mesitylene, solvent naphtha, butanol, isopropanol, methyl isobutyl ketone, hexane and the like. These may be used alone or in combination.

The preventive of fouling by the aquatic adhesion organisms, antifouling agent for a fishnet and antifouling coating of the present invention can be produced by a method known *per se*. For example, respective ingredients are mixed and dispersed by mixing in a paint conditioner, homo mixer, ball mill, pebble mill, roll mill, sand grinder and the like, by a method known *per se* in the field of the production coatings.

The composition of the present invention shows long-lasting superior prevention of adhesion, and thus, antifouling effect against coelenterates such as hydrozoas and obelia, shellfish such as barnacle, blue mussel, oyster and Serpula, tubicolous polychaetes such as *Hydroides norvegica*, *Serpula vermicularis*, *Pomatoleios kraussii* and *Dexiospira spirillum*, and other aquatic organisms. Thus, it can be used as a fouling preventive agent against aquatic adhesion organisms, antifouling agent for a fishnet or antifouling coating. The antifouling coating is applied to a ship, a structure and the like, that exist under water, such as ship, harbor facilities, buoy, undersea base, aqueduct of a power plant and the like. The antifouling agent for a fishnet can be applied to fixed net, culture net and various other nets and ropes to be kept underwater for a long time.

In particular, as an antifouling agent for a fishnet, the composition is low toxic and highly safe, and effectively prevents the above-mentioned organisms from adhering to a fishnet. Inasmuch as the active ingredient can be dissolved in an organic solvent, a homogeneous dissolution type antifouling agent for a fishnet can be obtained, which markedly improves workability in, for example, net dying and the like. The use thereof as an antifouling coating enables long-term retention of antifouling property and anti-slime property of the coating surface on the bottom of a ship or a structure, thereby proving its effectiveness for the prevention of adhesion of the aquatic organisms.

The present invention is described in more detail in the following by way of Examples, to which the present invention is not limited. In the Examples, the content is in wt%.

### Example 1

Into a four neck 300 ml flask equipped with a mechanical stirrer, a condenser, a dropping funnel and a thermometer was placed an aqueous solution of triphenylborane-sodium hydroxide adduct (156.7 g, reagent made by Tokyo Kasei Kogyo Co., Ltd.); triphenylborane-sodium hydroxide adduct content 9%), and stirred. It was heated to 70°C, and rosin amine (14.2 g, dehydroabiethylamine: reagent made by Tokyo Kasei Kogyo Co., Ltd.) was dropwise added over 30 min. The mixture was stirred at the same temperature for 3 hr to allow reaction. The mixture was cooled to room temperature and stood overnight. The precipitated crystals were filtrated by suction and washed with water. The crystals were dissolved in toluene (200 ml) and washed twice with the same amount of water. The toluene solution was dried over anhydrous magnesium sulfate and the solvent was evaporated to give 24.0 g (yield 91%) of a candy-like adduct without a crystalline form. The IR (infrared) spectrum is shown in Table 1, and NMR (nuclear magnetic resonance) spectrum is shown in Table 2. These results have confirmed that the crystal was the objective compound.

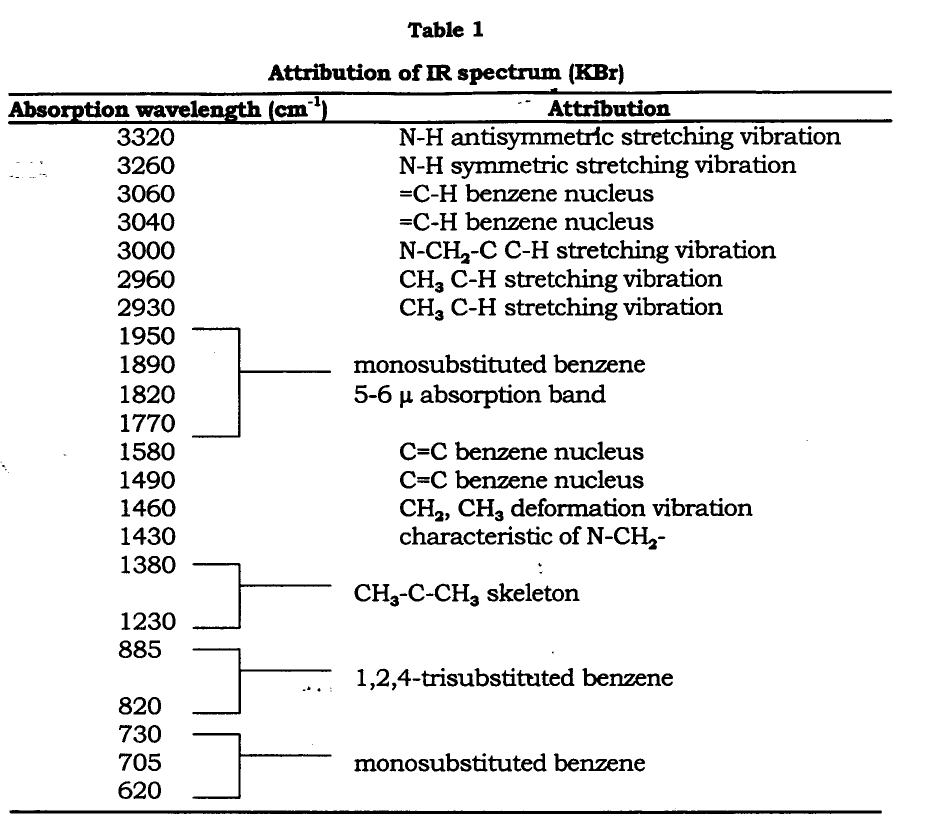

**Table 2**

| **Attribution of** ^{**1**}**HNMR spectrum (CDCl**_{**3**}**: 270MHz)** | | | |
|---|---|---|---|
| **δ (ppm)** | **Attribution** | | |
| 7.35-7.15 | m | 15H | |
| 7.12 | d | 1H | J (ortho) |
| 6.98 | d | 1H | J (ortho) |
| 6.87 | s | 1H | |
| 2.80 | septet | 1H | -CH(CH₃)₂ |
| 1.20 | d | 6H | -CH(CH₃)₂ |
| 1.18 | s | 3H | N-CH₂-C-CH₃ |
| 0.90 | s | 3H | -C*-CH₃ |

### Example 2

Into a four neck 300 ml flask equipped with a mechanical stirrer, a condenser, a dropping funnel and a thermometer was placed an aqueous solution of triphenylborane-sodium hydroxide adduct (156.7 g, reagent made by Tokyo Kasei Kogyo Co., Ltd.); triphenylborane-sodium hydroxide adduct content 9%), and stirred. It was heated to 70°C, and rosin amine D (14.2 g, product of YAMASO CHEMICAL Co., Ltd., total amine content, about 90%: dehydroabiethylamine; about 50%, dihydroabiethylamine; about 20% and tetrahydroabiethylamine; about 20%) was dropwise added over 30 min. The mixture was stirred at the same temperature for 3 hr to allow reaction. The mixture was cooled to room temperature and stood overnight. The precipitated crystals were filtered by suction and washed with water. The crystals were dissolved in toluene (200 ml) and washed twice with the same amount of water. The toluene solution was dried over anhydrous magnesium sulfate and the solvent was evaporated uner reduced pressure to give 24.0 g (yield 91%) of a candy-like reaction mixture without a crystalline form, which corresponded to the starting material.

### Example 3-18: Formulation examples of antifouling agent for fishnet

The respective amounts of each component shown in the following Examples and Comparative Examples were mixed to prepare antifouling agents for fishnet. In every Formulation Example, the obtained antifouling agent for a fishnet was a homogeneous solution without an insoluble matter. The polybutene used in Examples or Comparative Examples was LV-50 (trademark, manufactured by NIPPON OIL COMPANY, LTD.), and acrylic resin (50% xylene solution) was LR-155 (trademark, manufactured by Mitsubishi Rayon Co., Ltd.).

### Example 3

| | |
|---|---|
| • Adduct synthesized in Example 1 | 10% |
| • polybutene | 5% |
| • yellow petrolatum | 5% |
| • acrylic resin (50% xylene solution) | 20% |
| • xylene | 60% |

### Example 4

| | |
|---|---|
| • Adduct synthesized in Example 1 | 10% |
| • polybutene | 5% |
| • liquid paraffin | 5% |
| • acrylic resin (50% xylene solution) | 20% |
| • xylene | 60% |

### Example 5

| | |
|---|---|
| • Adduct synthesized in Example 1 | 6% |
| • tetraethylthiuramdisulfide | 8% |
| • liquid paraffin | 5% |
| • polybutene | 5% |
| • acrylic resin (50% xylene solution) | 20% |
| • xylene | 56% |

### Example 6

| | |
|---|---|
| • Adduct synthesized in Example 1 | 6% |
| • N-benzyl-2,3-dichloromaleimide | 8% |
| • di-t-nonylpolysulfide | 5% |
| • yellow petrolatum | 5% |
| • acrylic resin (50% xylene solution) | 20% |
| • xylene | 56% |

### Example 7

| | |
|---|---|
| • Adduct synthesized in Example 1 | 6% |
| • nonylphenol | 10% |
| • polybutene | 5% |
| • yellow petrolatum | 5% |
| • acrylic resin (50% xylene solution) | 20% |
| • xylene | 54% |

### Example 8

| | |
|---|---|
| • Adduct synthesized in Example 1 | 4% |
| • tetraethylthiuramdisulfide | 6% |
| • N-benzyl-2,3-dichloromaleimide | 6% |
| • liquid paraffin | 10% |
| • acrylic resin (50% xylene solution) | 20% |
| • xylene | 54% |

### Example 9

| | |
|---|---|
| • Adduct synthesized in Example 1 | 4% |
| • tetraethylthiuramdisulfide | 4% |
| • nonylphenol | 10% |
| • polybutene | 5% |
| • acrylic resin (50% xylene solution) | 20% |
| • xylene | 57% |

### Example 10

| | |
|---|---|
| • Adduct synthesized in Example 1 | 4% |
| • N-2',6'-diethylphenyl-2,3-dichloromaleimide | 6% |
| • nonylphenol | 10% |
| • yellow petrolatum | 5% |
| • acrylic resin (50% xylene solution) | 20% |
| • xylene | 55% |

### Example 11

| | |
|---|---|
| • Adduct synthesized in Example 2 | 10% |
| • polybutene | 5% |
| • yellow petrolatum | 5% |
| • acrylic resin (50% xylene solution) | 20% |
| • xylene | 60% |

### Example 12

| | |
|---|---|
| • Adduct synthesized in Example 2 | 10% |
| • polybutene | 5% |
| • liquid paraffin | 5% |
| • acrylic resin (50% xylene solution) | 20% |
| • xylene | 60% |

### Example 13

| | |
|---|---|
| • Adduct synthesized in Example 2 | 6% |
| • tetraethylthiuramdisulfide | 8% |
| • liquid paraffin | 5% |
| • polybutene | 5% |
| • acrylic resin (50% xylene solution) | 20% |
| • xylene | 56% |

### Example 14

| | |
|---|---|
| • Adduct synthesized in Example 2 | 6% |
| • N-benzyl-2,3-dichloromaleimide | 8% |
| • di-t-nonylpolysulfide | 5% |
| • yellow petrolatum | 5% |
| • acrylic resin (50% xylene solution) | 20% |
| • xylene | 56% |

### Example 15

| | |
|---|---|
| • Adduct synthesized in Example 2 | 6% |
| • nonylphenol | 10% |
| • polybutene | 5% |
| • yellow petrolatum | 5% |
| • acrylic resin (50% xylene solution) | 20% |
| • xylene | 54% |

### Example 16

| | |
|---|---|
| • Adduct synthesized in Example 2 | 4% |
| • tetraethylthiuramdisulfide | 6% |
| • N-benzyl-2,3-dichloromaleimide | 6% |
| • liquid paraffin | 10% |
| • acrylic resin (50% xylene solution) | 20% |
| • xylene | 54% |

### Formulation Example 17

| | |
|---|---|
| • Adduct synthesized in Example 2 | 4% |
| • tetraethylthiuramdisulfide | 4% |
| • nonylphenol | 10% |
| • polybutene | 5% |
| • acrylic resin (50% xylene solution) | 20% |
| • xylene | 57% |

### Example 18

| | |
|---|---|
| • Adduct synthesized in Example 2 | 4% |
| • N-2',6'-diethylphenyl-2,3-dichloromaleimide | 6% |
| • nonylphenol | 10% |
| • yellow petrolatum | 5% |
| • acrylic resin (50% xylene solution) | 20% |
| • xylene | 55% |

### Comparative Example 1

| | |
|---|---|
| • tetraethylthiuramdisulfide | 10% |
| • polybutene | 5% |
| • yellow petrolatum | 5% |
| • acrylic resin (50% xylene solution) | 20% |
| • xylene | 60% |

### Comparative Example 2

| | |
|---|---|
| • zinc bis(dimethyldithiocarbamoyl) ethylenebisdithiocarbamate | 10% |
| • polybutene | 5% |
| • liquid paraffin | 5% |
| • acrylic resin (50% xylene solution) | 20% |
| • xylene | 60% |

### Experimental Example 1: effect of antifouling agent for a fishnet

The antifouling agents for fishnet shown in Examples 3-10 and Comparative Examples 1 and 2 were respectively applied to Tetoron unknotted nets (1000/26, 3 *sun* mesh) by immersion and air-dried. The nets were retained at about 15 meters underwater in the sea off Konbumori in Hokkaido for 4 months from August 1995. The nets were evaluated for the degree of fouling by the following criteria, the results of which are summarized in Table 3. The adhesion organisms were mostly hydrozoas. As Comparative Example 3, the evaluation results without a treatment with an antifouling agent for a fishnet are shown.
Evaluation A: Area of fouling of fishnet, 0%, no adhesion organisms.
Evaluation B: Area of fouling of fishnet, 0-10%, small amount of adhesion organisms to the extent practically acceptable.
Evaluation C: Area of fouling of fishnet, 10-50%, great amount of adhesion organisms, unpractical as a fishnet.
Evaluation D: Area of fouling of fishnet, 50% or more, markedly greater amount of adhesion organisms.

**Table 3**

| **Kind of antifouling agent for fishnet** | **1 month later** | **2 months later** | **3 months later** | **4 months later** |
|---|---|---|---|---|
| Ex. 3 | A | A | A | A |
| Ex. 4 | A | A | A | B |
| Ex. 5 | A | A | A | A |
| Ex. 6 | A | A | A | A |
| Ex. 7 | A | A | A | B |
| Ex. 8 | A | A | A | B |
| Ex. 9 | A | A | A | B |
| Ex. 10 | A | A | A | B |
| Com.Ex. 1 | B | D | | |
| Com.Ex. 2 | A | A | B | C |
| Com.Ex. 3 | D | | | |

From Table 3, it is apparent that the antifouling agents for fishnet of Examples 3-10 were free from adhesion of hydrozoas or obelia to the fishnets immersed underwater in the sea for at least 3 months, thus proving their effects superior to Comparative Examples 1 and 2. That is, it was clarified that the adduct synthesized in Example 1 shows extremely strong, long-lasting and practical antifouling effect against coelenterates such as hydrozoas and obelia.

### Experimental Example 2 : effect of antifouling agent for a fishnet

The antifouling agents for fishnet shown in Examples 3-10 and Comparative Example 1 were respectively applied to polyethylene unknotted nets (6 knots, 400 deniers/60 piles) by immersion and air-dried. The nets were retained at about 1 meter underwater in the sea in the Tanabe bay in Wakayama-ken for 6 months from April 1995. The nets were evaluated for the degree of fouling according to the criteria of Experimental Example 1, the results of which are summarized in Table 4. As Comparative Example 3, the evaluation results without a treatment with an antifouling agent for a fishnet are shown.

**Table 4**

| **Kind of antifouling agent for fishnet** | **1 month later** | **2 months later** | **3 months later** | **4 months later** | **5 months later** | **6 months later** |
|---|---|---|---|---|---|---|
| Ex. 3 | A | A | A | A | A | A |
| Ex. 4 | A | A | A | A | A | A |
| Ex. 5 | A | A | A | A | A | B |
| Ex. 6 | A | A | A | A | A | B |
| Ex. 7 | A | A | A | A | B | C |
| Ex. 8 | A | A | A | A | A | B |
| Ex. 9 | A | A | A | A | B | C |
| Ex. 10 | A | A | A | A | B | C |
| Com.Ex.1 | B | C | D | | | |
| Com.Ex.3 | D | | | | | |

In Comparative Examples 1 and 3, a number of organisms inclusive of barnacle and *Hydroides norvegica* adhered in one or two months. In Examples 3 to 10, shellfish, tubicolous polychaetes and other organisms did not adhere at all to the nets immersed in water for 4 to 6 months.

### Experimental Example 3 : effect of antifouling agent for a fishnet

The antifouling agents for fishnet shown in Examples 11-18 and Comparative Examples 1 and 2 were respectively applied to Tetoron unknotted nets (1000/26, 3 *sun* mesh) by immersion and air-dried. The nets were retained at about 20 meters underwater in the sea near Taneichimachi, Iwate-ken for 4 months from November 1995. The nets were evaluated for the degree of fouling by the criteria of Experimental Example 1, the results of which are summarized in Table 5. As Comparative Example 3, the evaluation results without a treatment with an antifouling agent for a fishnet are shown.

**Table 5**

| **Kind of antifouling agent for fishnet** | **1 month later** | **2 months later** | **3 months later** | **4 months later** |
|---|---|---|---|---|
| Ex. 11 | A | A | A | A |
| Ex. 12 | A | A | A | A |
| Ex. 13 | A | A | A | A |
| Ex. 14 | A | A | A | A |
| Ex. 15 | A | A | A | A |
| Ex. 16 | A | A | A | A |
| Ex. 17 | A | A | A | B |
| Ex. 18 | A | A | A | B |
| Com.Ex. 1 | B | C | D | |
| Com.Ex. 2 | A | A | B | C |
| Com.Ex. 3 | C | D | | |

From Table 5, it is apparent that the antifouling agents for fishnet of Examples 11-18 were free from adhesion of hydrozoas or obelia to the fishnets immersed underwater in the sea for at least 3 months, thus proving their effects superior to Comparative Examples 1 and 2. That is, it was clarified that the adduct synthesized in Example 2 shows extremely strong, long-lasting and practical antifouling effect against coelenterates such as hydrozoas and obelia.

### Experimental Example 4 : effect of antifouling agent for a fishnet

The antifouling agents for fishnet shown in Examples 11-18 and Comparative Example 1 were respectively applied to polyethylene unknotted nets (6 knots, 400 deniers/60 plies) by immersion and air-dried. The nets were retained at about 2 meters underwater in the sea near Shukumo-shi, Kochi-ken for 6 months from September 1995. The nets were evaluated for the degree of fouling according to the criteria of Experimental Example 1, the results of which are summarized in Table 6. As Comparative Example 3, the evaluation results without a treatment with an antifouling agent for a fishnet are shown.

**Table 6**

| **Kind of antifouling agent for fishnet** | **1 month later** | **2 months later** | **3 months later** | **4 months later** | **5 months later** | **6 months later** |
|---|---|---|---|---|---|---|
| Ex. 3 | A | A | A | A | A | A |
| Ex. 4 | A | A | A | A | A | A |
| Ex. 5 | A | A | A | A | A | B |
| Ex. 6 | A | A | A | A | A | B |
| Ex. 7 | A | A | A | A | B | B |
| Ex. 8 | A | A | A | A | A | B |
| Ex. 9 | A | A | A | A | B | B |
| Ex. 10 | A | A | A | A | A | B |
| Com.Ex.1 | B | C | D | | | |
| Com.Ex.3 | D | | | | | |

### Examples 19-38

The ingredients shown in Table 7 were charged in a ball mill and dispersed for 16 hr to prepare antifouling coatings.

The symbols of compounds and trademarks in Table 7 are as follows.
- Raloflex_MP-45 (manufactured by BASF, Germany: vinyl chloride-vinyl isobutylate copolymer)
- Briolite S-5B (manufactured by Goodyear, USA: styrene-butadiene copolymer)
- VAGH (manufactured by UCC, USA: poly(vinyl chloride) resin)
- Compound I: bis(2-pyridylthio-1-oxide)zinc
- Compound II: 2-tert-butylamino-4-cyclopropylamino-6-methylthio-1,3,5-triazine
- Compound III: bis(2-pyridylthio-1-oxide)copper

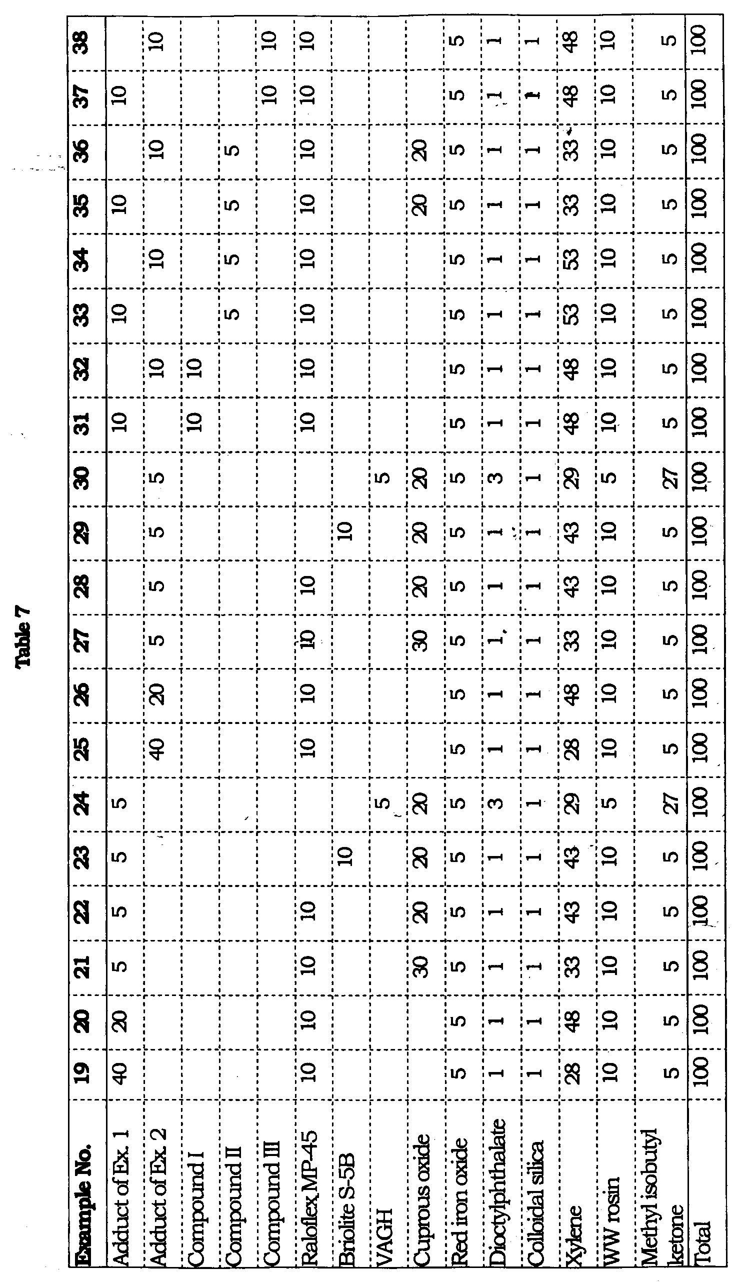

### Comparative Examples 4-6

The coatings containing known antifouling agents were prepared. The contents are shown in Table 8.

**Table 8**

| **Comp. Ex. No.** | **4** | **5** | **6** |
|---|---|---|---|
| Raloflex MP-45 | 10 | | |
| Briolite S-5B | | 10 | |
| VAGH | | | 5 |
| Cuprous oxide | 45 | 45 | 25 |
| Zinc white | 5 | 5 | 3 |
| Triphenyl tin hydroxide | | | 3 |
| Red iron oxide | 5 | 5 | 5 |
| Dioctylphthalate | 1 | 1 | 3 |
| Colloidal silica | 1 | 1 | 1 |
| Xylene | 20 | 20 | 25 |
| WW rosin | 10 | 10 | 5 |
| Methyl isobutyl ketone | 3 | 3 | 25 |
| Total | 100 | 100 | 100 |

### Experimental Example: effect of antifouling agent for bottom of ship

The above-mentioned antifouling coatings for the bottom of ship were subjected to antifouling tests. For the tests for the antifouling effect, antifouling coatings of Examples 19-38 and Comparative Examples 4-6 were applied twice onto 100×300 mm test steel plates previously applied with an anti-corrosion coating (commercially available ship bottom No. 1 coating based on coal tar/vinyl chloride resin), to a film thickness of 60-80 microns and dried for 24 hr. The plates were immersed in the sea (1 meter deep) using a test raft off coast of Tanabe-shi, Wakayama-ken, and the amount of adhesion animals such as barnacle and Serpula and plants such as sea lettuce and laver was visually observed. Changes in areal ratio (%) of adhesion are shown in Table 9. In addition, changes in the amount of slime adhesion are shown in Table 10. The test period was from April 1994 to October 1996.

**Table 9**

| **Immersion period fouling prevention · organism adhesion area (%)** | | | | | |
|---|---|---|---|---|---|
| Test coating | 6 months | 12 months | 16 months | 20 months | 24 months |
| Ex. 19 | 0 | 0 | 0 | 0 | 0 |
| Ex. 20 | 0 | 0 | 0 | 5 | 10 |
| Ex. 21 | 0 | 0 | 0 | 0 | 5 |
| Ex. 22 | 0 | 0 | 0 | 0 | 5 |
| Ex. 23 | 0 | 0 | 0 | 0 | 5 |
| Ex. 24 | 0 | 0 | 0 | 5 | 10 |
| Ex. 25 | 0 | 0 | 0 | 0 | 0 |
| Ex. 26 | 0 | 0 | 0 | 5 | 10 |
| Ex. 27 | 0 | 0 | 0 | 0 | 5 |
| Ex. 28 | 0 | 0 | 0 | 0 | 5 |
| Ex. 29 | 0 | 0 | 0 | 0 | 5 |
| Ex. 30 | 0 | 0 | 0 | 5 | 10 |
| Ex. 31 | 0 | 0 | 0 | 0 | 5 |
| Ex. 32 | 0 | 0 | 0 | 0 | 5 |
| Ex. 33 | 0 | 0 | 0 | 0 | 5 |
| Ex. 34 | 0 | 0 | 0 | 0 | 5 |
| Ex. 35 | 0 | 0 | 0 | 0 | 5 |
| Ex. 36 | 0 | 0 | 0 | 0 | 5 |
| Ex. 37 | 0 | 0 | 0 | 0 | 5 |
| Ex. 38 | 0 | 0 | 0 | 0 | 5 |
| Comp.Ex.4 | 0 | 0 | 10 | 20 | 40 |
| Comp.Ex.5 | 0 | 0 | 10 | 20 | 40 |
| Comp.Ex.6 | 0 | 10 | 20 | 50 | 80 |

**Table 10**

| **Immersion period slime adhesion amount · adhesion area (%)** | | | | | |
|---|---|---|---|---|---|
| Test coating | 3 months | 6 months | 9 months | 12 months | 15 months |
| Ex. 19 | 0 | 0 | 0 | 10 | 30 |
| Ex. 20 | 0 | 0 | 10 | 30 | 50 |
| Ex. 21 | 0 | 0 | 10 | 30 | 50 |
| Ex. 22 | 0 | 0 | 5 | 20 | 40 |
| Ex. 23 | 0 | 0 | 5 | 20 | 40 |
| Ex. 24 | 0 | 5 | 20 | 30 | 60 |
| Ex. 25 | 0 | 0 | 0 | 10 | 30 |
| Ex. 26 | 0 | 0 | 10 | 30 | 50 |
| Ex. 27 | 0 | 0 | 10 | 30 | 50 |
| Ex. 28 | 0 | 0 | 5 | 20 | 40 |
| Ex. 29 | 0 | 0 | 5 | 20 | 40 |
| Ex. 30 | 0 | 5 | 20 | 30 | 60 |
| Ex. 31 | 0 | 0 | 5 | 20 | 30 |
| Ex. 32 | 0 | 0 | 5 | 20 | 30 |
| Ex. 33 | 0 | 0 | 0 | 10 | 30 |
| Ex. 34 | 0 | 0 | 0 | 10 | 30 |
| Ex. 35 | 0 | 0 | 0 | 5 | 20 |
| Ex. 36 | 0 | 0 | 0 | 5 | 20 |
| Ex. 37 | 0 | 0 | 5 | 20 | 30 |
| Ex. 38 | 0 | 0 | 5 | 20 | 30 |
| Comp.Ex.4 | 0 | 10 | 30 | 50 | 80 |
| Comp.Ex.5 | 0 | 10 | 30 | 40 | 100 |
| Comp.Ex.6 | 5 | 20 | 50 | 80 | 100 |

From the results of Experimental Examples 1 to 4 for the effects of the antifouling agent for fishnet and Experimental Example for the effects of the antifouling agent for the bottom of ship, it is apparent that the antifouling agents for fishnet and antifouling coatings for the bottom of ship, which contain, as an active ingredient, the inventive compound or mixture synthesized in Examples 1 and 2 have superior antifouling effect against all aquatic adhesion organisms. In particular, it was clarified that they are strikingly effective against coelenterates such as hydrozoas and obelia, shellfish such as barnacle, tubicolous polychaetes such as *Hydroides norvegica* and the like, adhesion of which organisms is difficult to prevent with conventional antifouling agents and adhesion of which produces disastrous damages.

### Industrial Applicability

The compound and the mixture of the present invention are associated with less possibility of environmental pollution and show superior antifouling effects against fouling organisms such as coelenterates, shellfish, tubicolous polychaetes and the like. Therefore, compositions containing them can be used effectively as a preventive of the adhesion or fouling by the aquatic adhesion organisms, an antifouling agent for a fishnet that prevents adhesion and growth of fouling organisms on culture or fixed fishnets or as an antifouling coating that prevents fouling organisms from adhering to and growing on the bottom of a ship, a material used for a fishnet such as buoy and rope, and condenser water channels of nuclear energy or thermal power plants.

This application is based on application Nos. 11339/1996 and 147602/1996 filed in Japan, the contents of which are incorporated hereinto by reference.

## Claims

1. A composition comprising a triphenylborane-rosin amine adduct.

2. A composition comprising at least one member selected from the group consisting of a triphenylborane-dehydroabiethylamine adduct, a triphenylborane-dihydroabiethylamine adduct and a triphenylborane-tetrahydroabiethylamine adduct.

3. A compound selected from the group consisting of a triphenylborane-dehydroabiethylamine adduct of the formula (1) 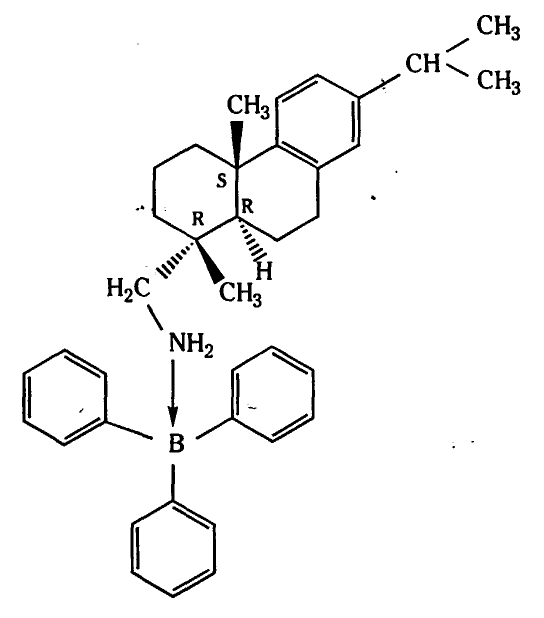 a triphenylborane-dihydroabiethylamine adduct of the formula (2) 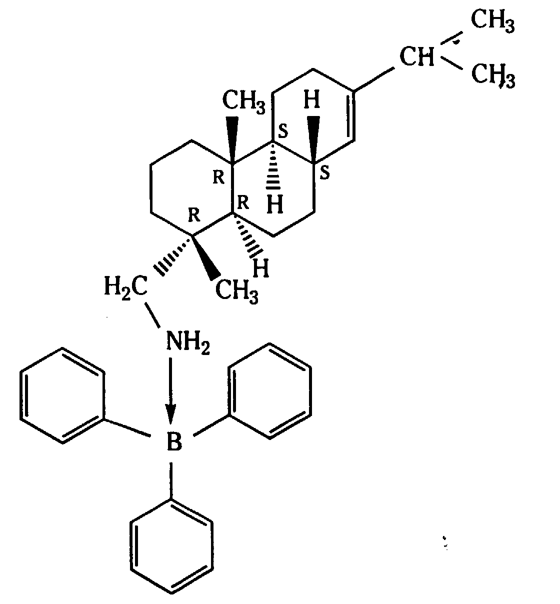 a triphenylborane-dihydroabiethylamine adduct of the formula (3) 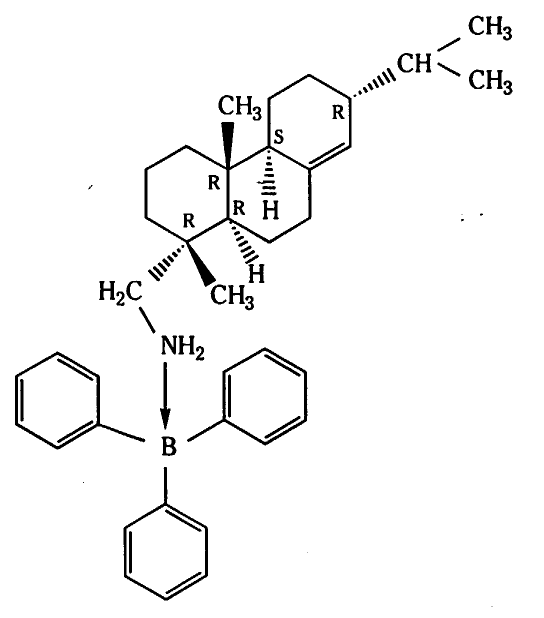 a triphenylborane-dihydroabiethylamine adduct of the formula (4) 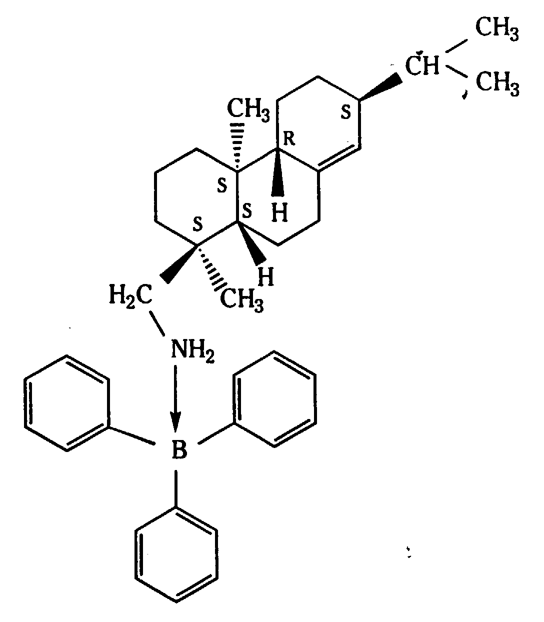 a triphenylborane-dihydroabiethylamine adduct of the formula (5) 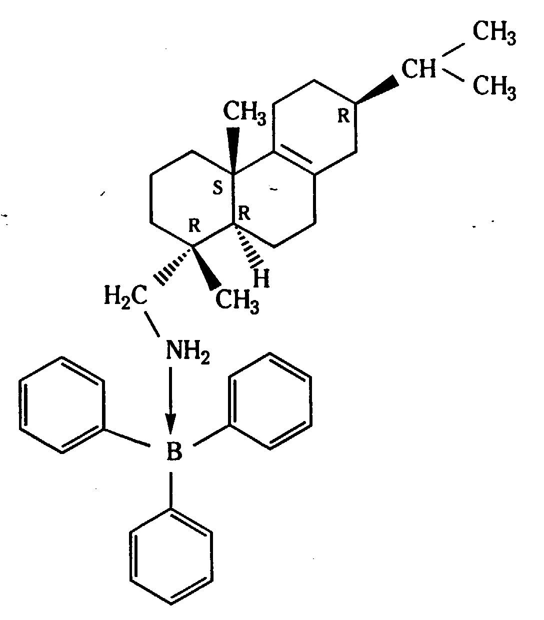 and a triphenylborane-dihydroabiethylamine adduct of the formula (6)

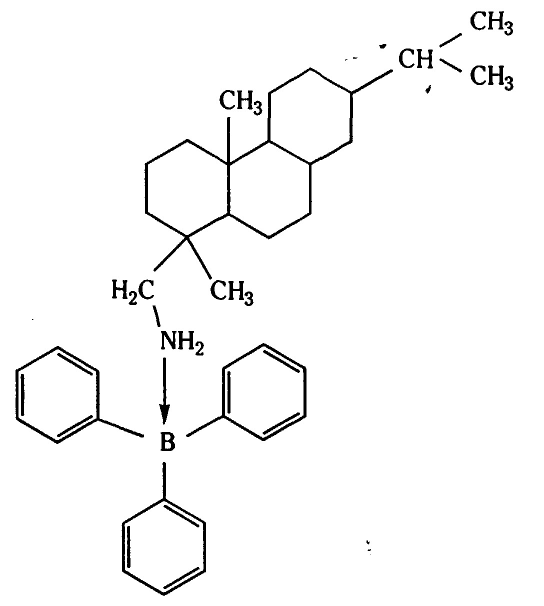

4. A composition comprising at least one adduct selected from the group consisting of a triphenylborane-dehydroabiethylamine adduct of the formula (1) 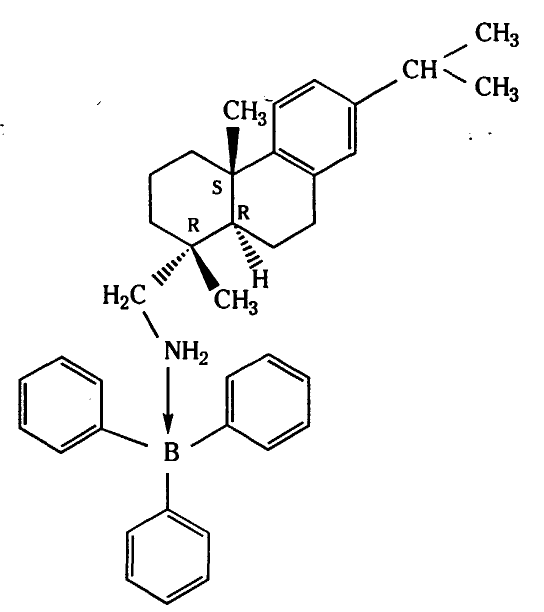 a triphenylborane-dihydroabiethylamine adduct of the formula (2) 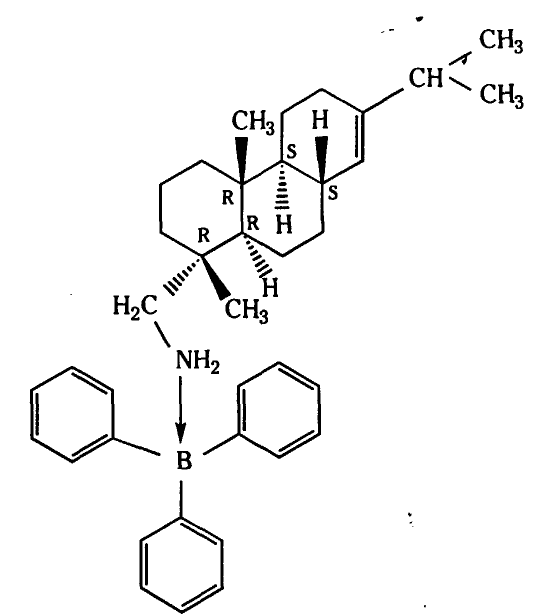 a triphenylborane-dihydroabiethylamine adduct of the formula (3) 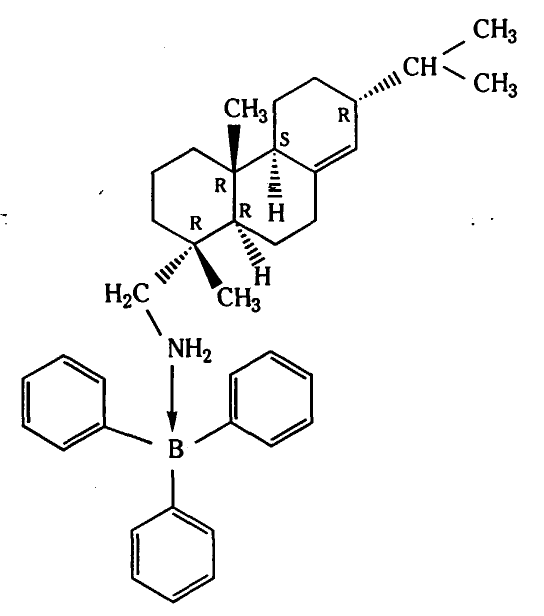 a triphenylborane-dihydroabiethylamine adduct of the formula (4) 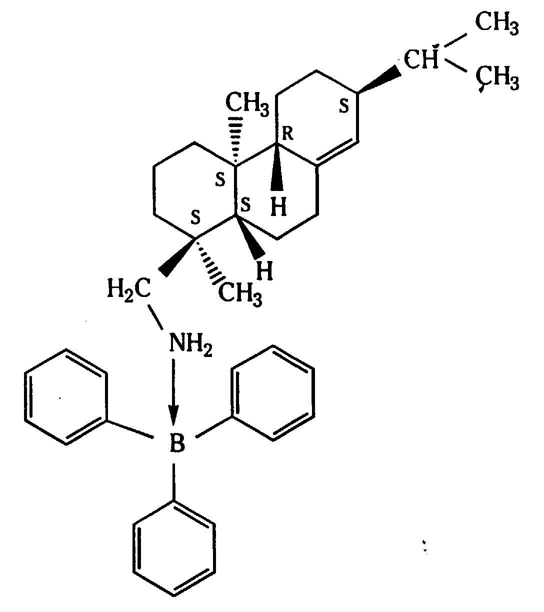 a triphenylborane-dihydroabiethylamine adduct of the formula (5) 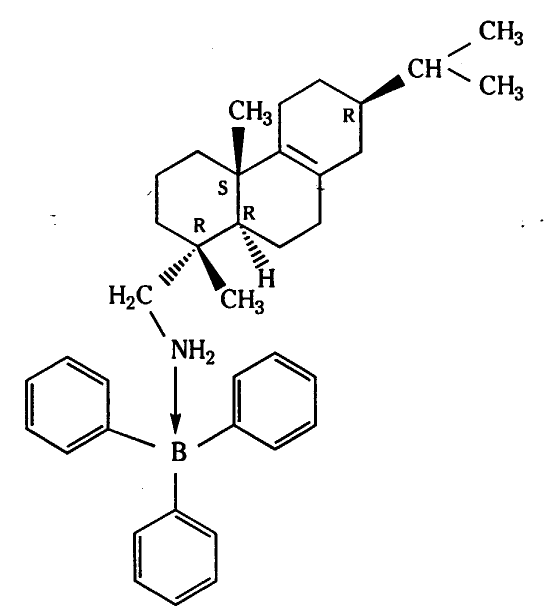 and a triphenylborane-tetrahydroabiethylamine adduct of the formula (6)

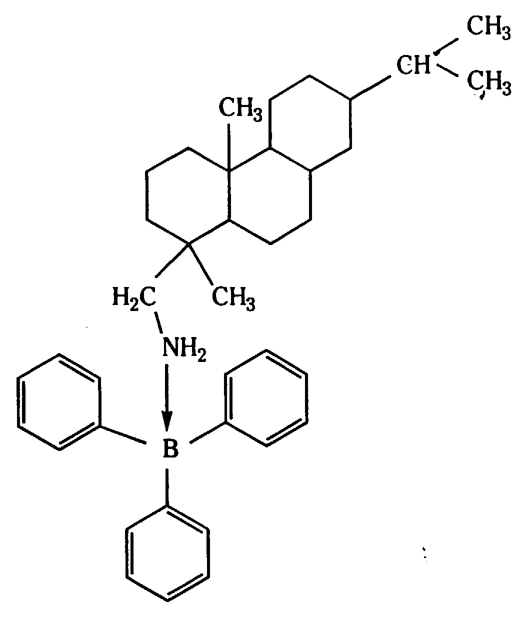

5. A preventive of fouling due to aquatic adhesion organism, which comprises a composition comprising a triphenylborane-rosin amine adduct.

6. A preventive of fouling due to aquatic adhesion organism, which comprises a composition comprising at least one adduct selected from the group consisting of a triphenylborane-dehydroabiethylamine adduct, a triphenylborane-dihydroabiethylamine adduct and a triphenylborane-tetrahydroabiethylamine adduct.

7. A preventive of fouling due to aquatic adhesion organism, which comprises a compound selected from the group consisting of a triphenylborane-dehydroabiethylamine adduct of the formula (1) 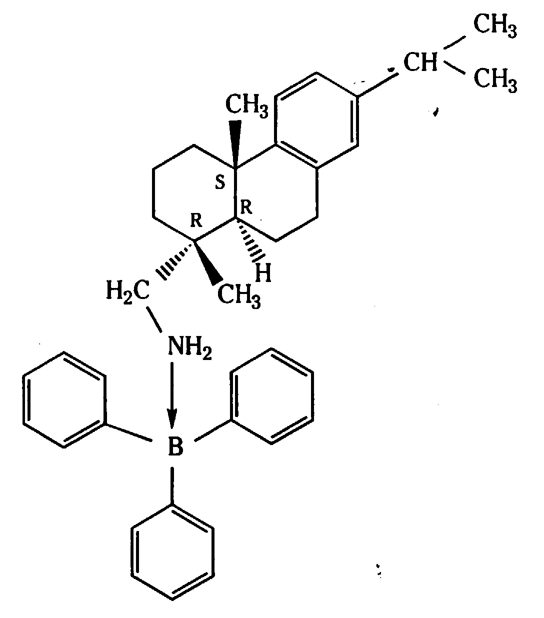 a triphenylborane-dihydroabiethylamine of the formula (2) 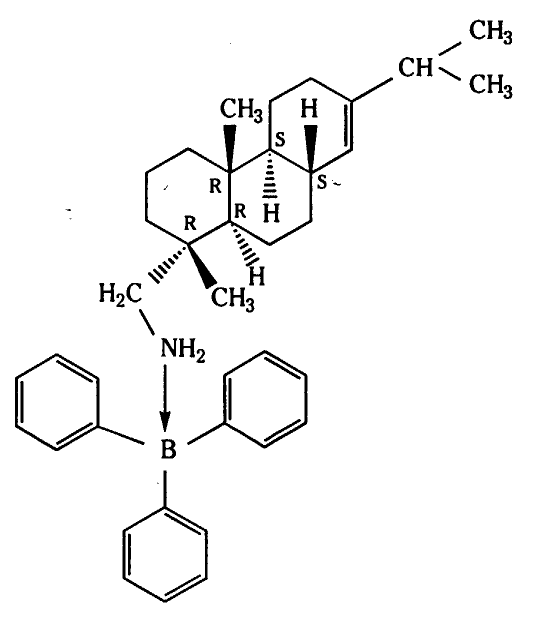 a triphenylborane-dihydroabiethylamine adduct of the formula (3) 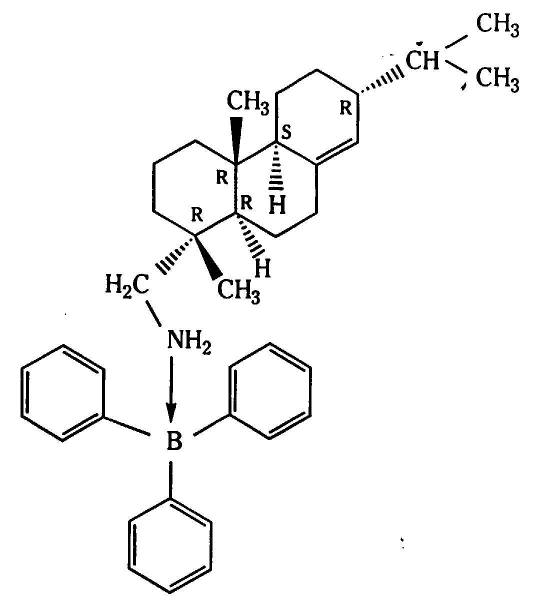 a triphenylborane-dihydroabiethylamine adduct of the formula (4) 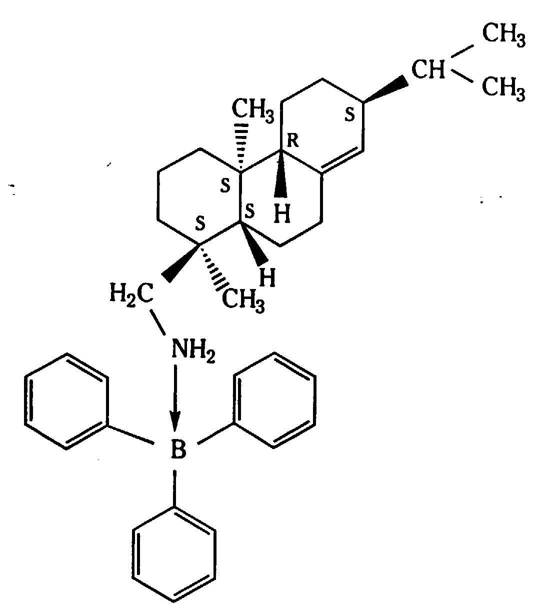 a triphenylborane-dihydroabiethylamine adduct of the formula (5) 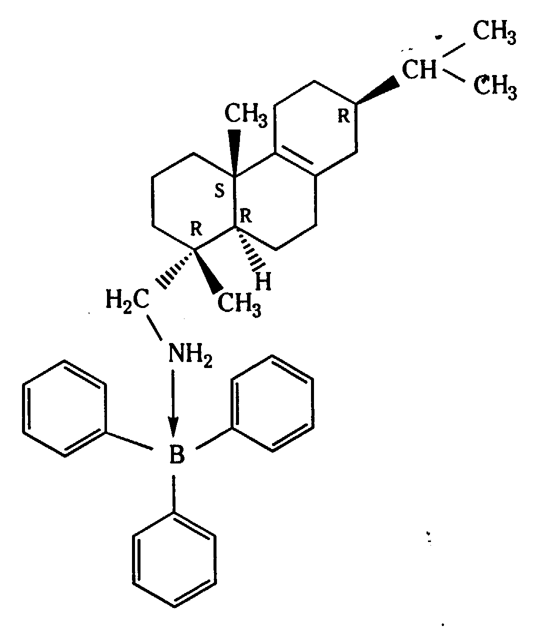 and a triphenylborane-tetrahydroabiethylamine adduct of the formula (6)

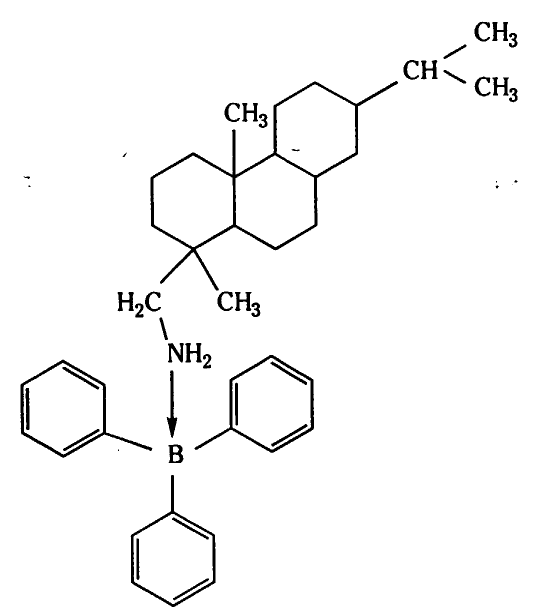

8. A preventive of fouling due to aquatic adhesion organism, which comprises a composition comprising at least one adduct selected from the group consisting of a triphenylborane-dehydroabiethylamine adduct of the formula (1) 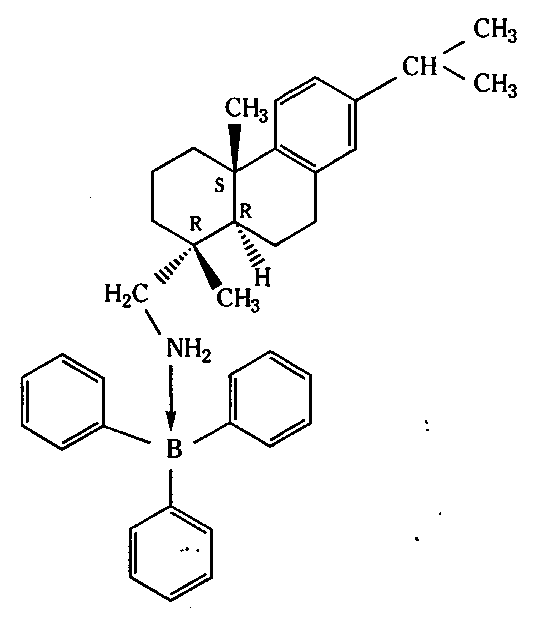 a triphenylborane-dihydroabiethylamine adduct of the formula (2) 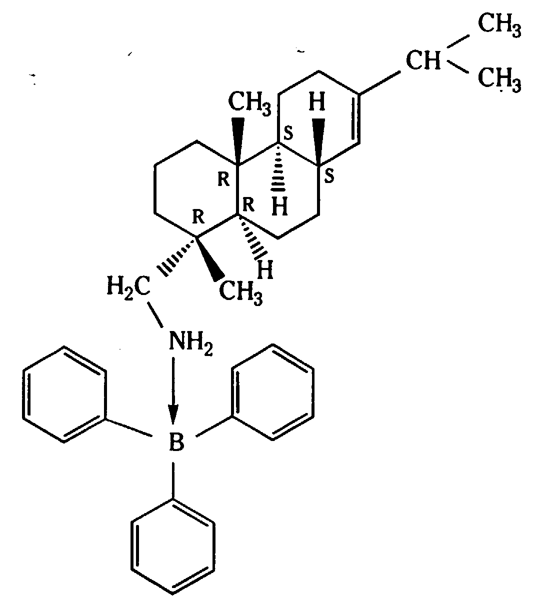 a triphenylborane-dihydroabiethylamine adduct of the formula (3) 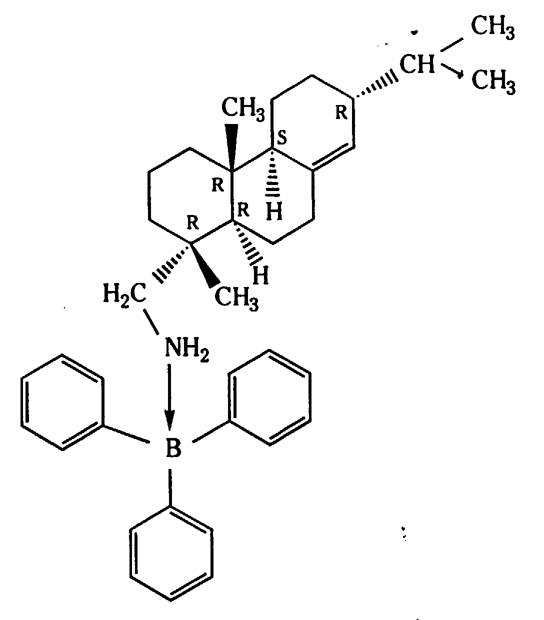 a triphenylborane-dihydroabiethylamine adduct of the formula (4) 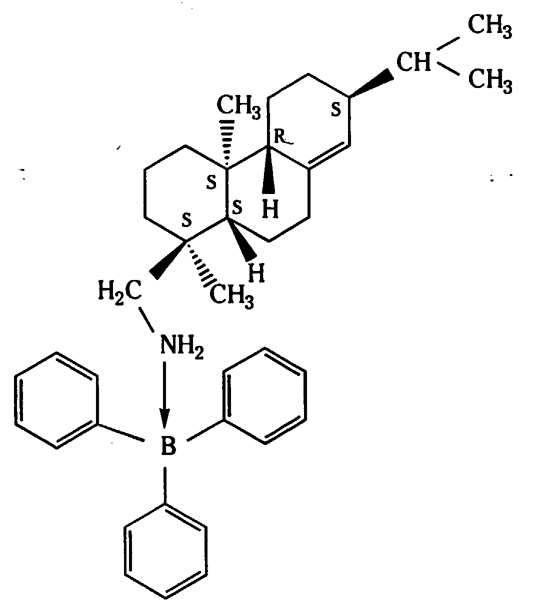 a triphenylborane-dihydroabiethylamine adduct of the formula (5) 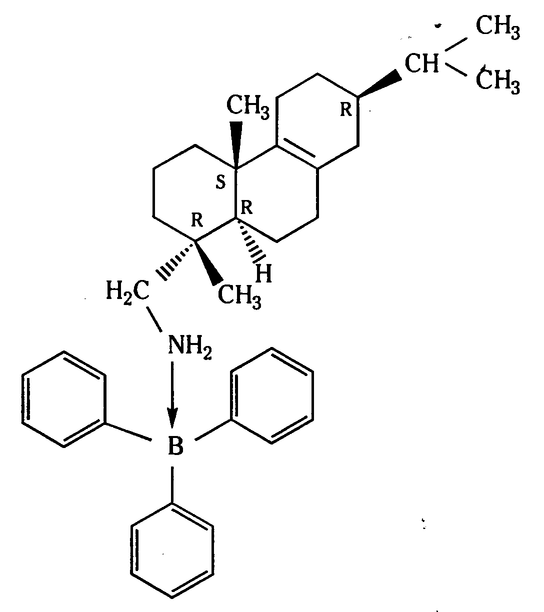 and a triphenylborane-tetrahydroabiethylamine adduct of the formula (6)

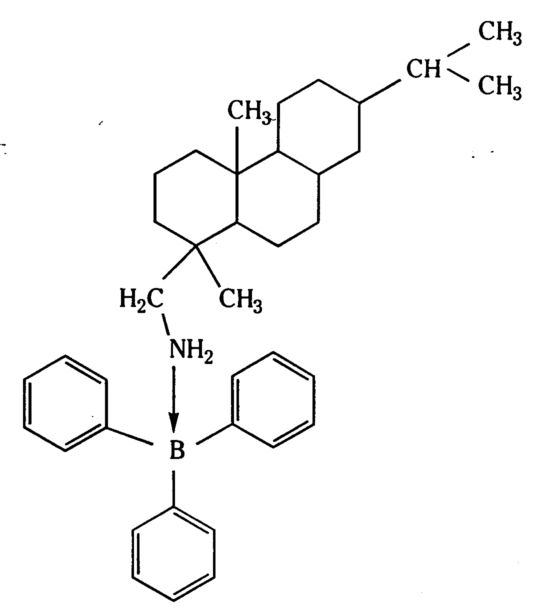

9. An antifouling agent for a fishnet, which comprises a composition comprising a triphenylborane-rosin amine adduct.

10. An antifouling agent for a fishnet, which comprises a composition comprising at least one adduct selected from the group consisting of a triphenylborane-dehydroabiethylamine adduct, a triphenylborane-dihydroabiethylamine adduct and a triphenylborane-tetrahydroabiethylamine adduct.

11. An antifouling agent for a fishnet, which comprises a compound selected from the group consisting of a triphenylborane-dehydroabiethylamine adduct of the formula (1) 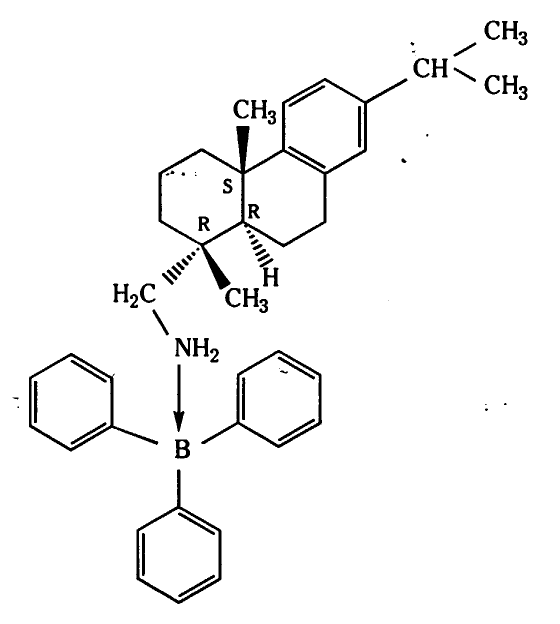 a triphenylborane-dinydroabiethylamine adduct of the formula (2) 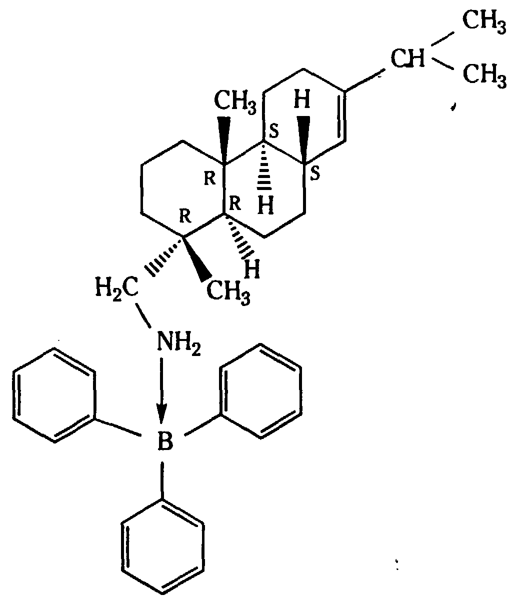 a triphenylborane-dihydroabiethylamine adduct of the formula (3) 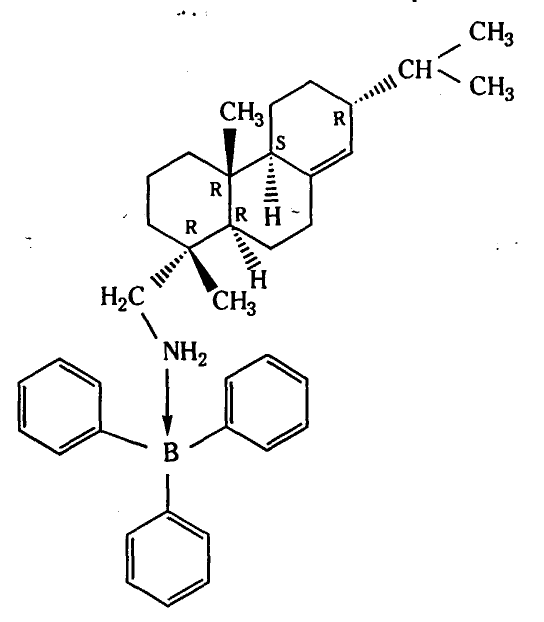 a triphenylborane-dihydroabiethylamine adduct of the formula (4) 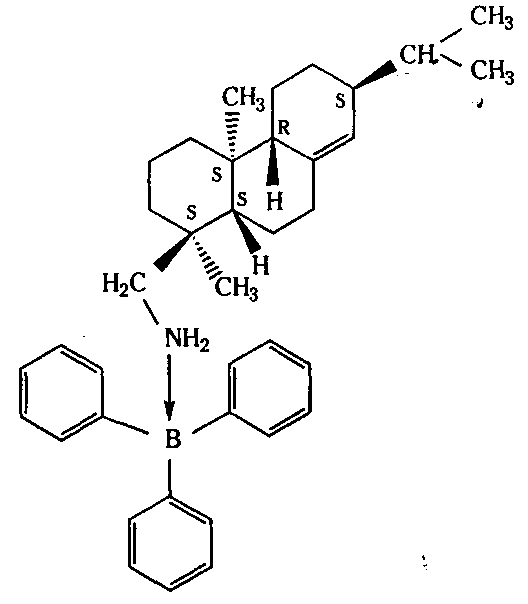 a triphenylborane-dihydroabiethylamine adduct of the formula (5) 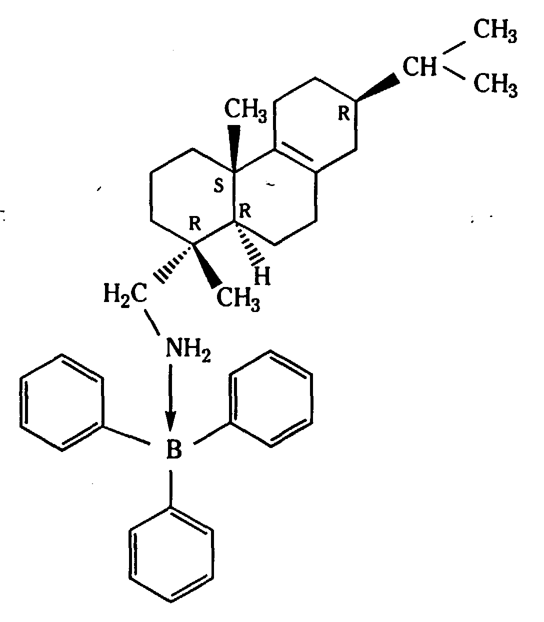 and a triphenylborane-tetrahydroabiethylamine adduct of the formula (6)

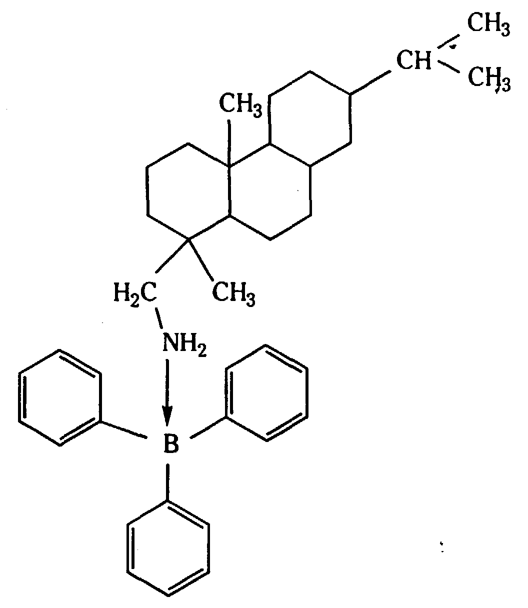

12. An antifouling agent for a fishnet, which comprises a composition comprising at least one adduct selected from the group consisting of a triphenylborane-dehydroabiethylamine adduct of the formula (1) 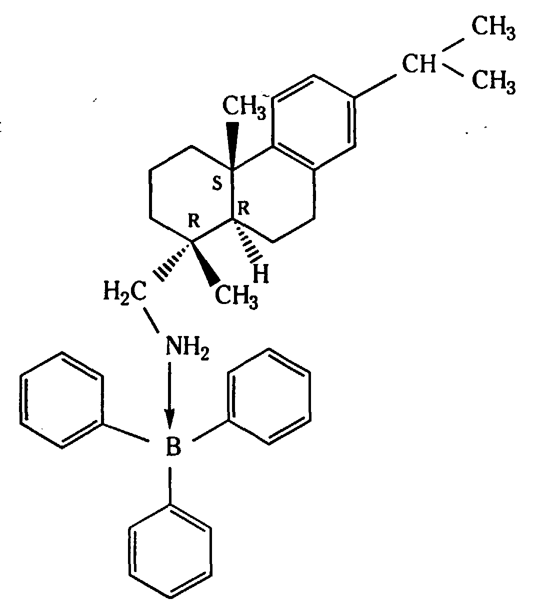 a triphenylborane-dihydroabiethylamine adduct of the formula (2) 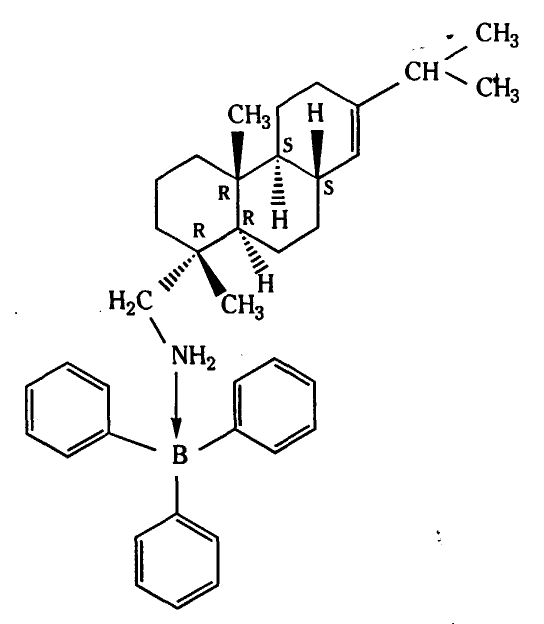 a triphenylborane-dihydroabiethylamine adduct of the formula (3) 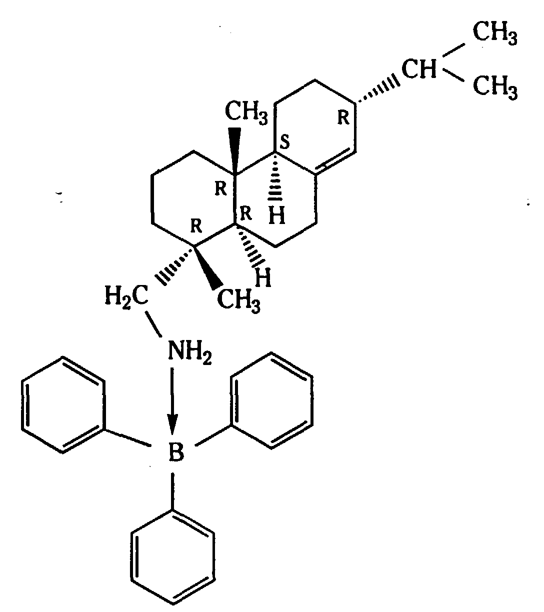 a triphenylborane-dihydroabiethylamine adduct of the formula (4) 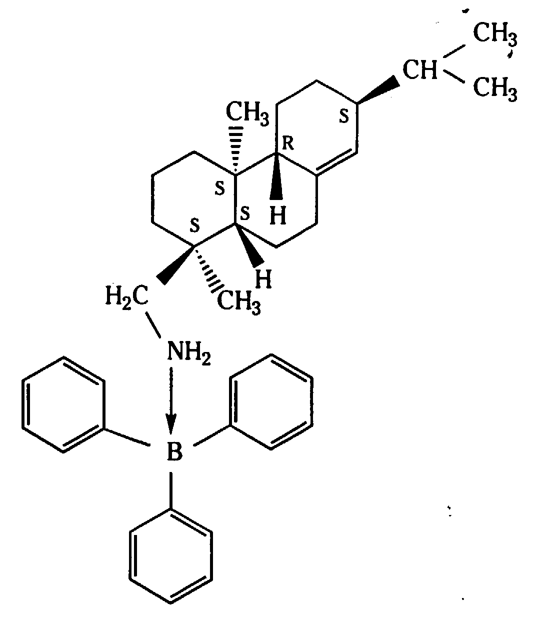 a triphenylborane-dihydroabiethylamine adduct of the formula (5) 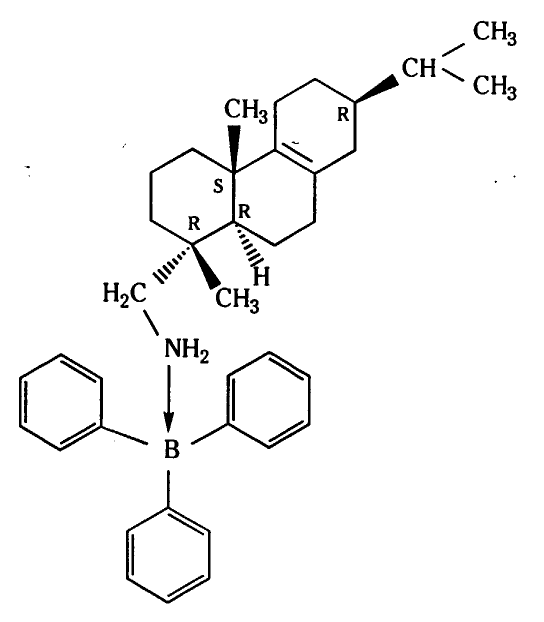 and a triphenylborane-tetrahydroabiethylamine adduct of the formula (6)

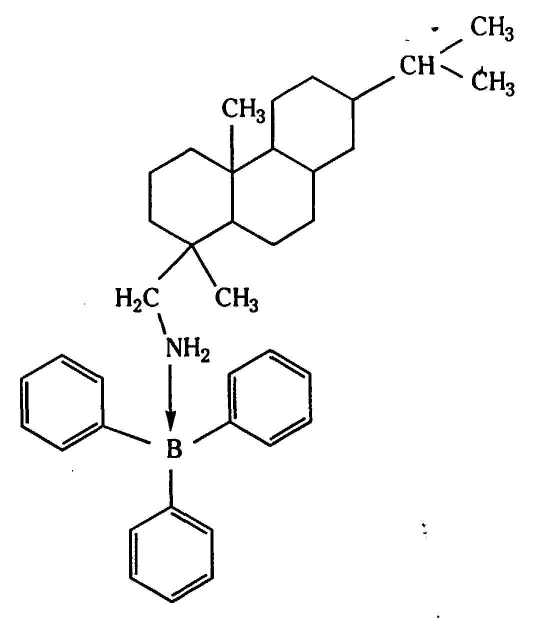

13. An antifouling coating comprising a composition comprising a triphenylborane-rosin amine adduct.

14. An antifouling coating comprising a composition comprising at least one adduct selected from the group consisting of a triphenylborane-dehydroabiethylamine adduct, a triphenylborane-dihydroabiethylamine adduct and a triphenylborane-tetrahydroabiethylamine adduct.

15. An antifouling coating comprising a compound selected from the group consisting of a triphenylborane-dehydroabiethylamine adduct of the formula (1) 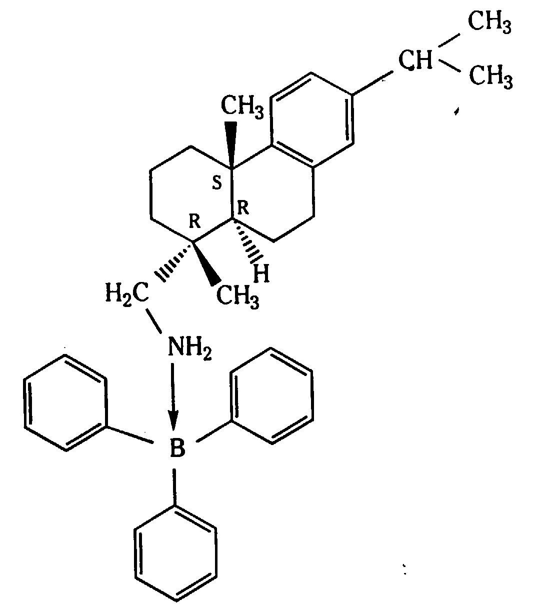 a triphenylborane-dihydroabiethylamine adduct of the formula (2) 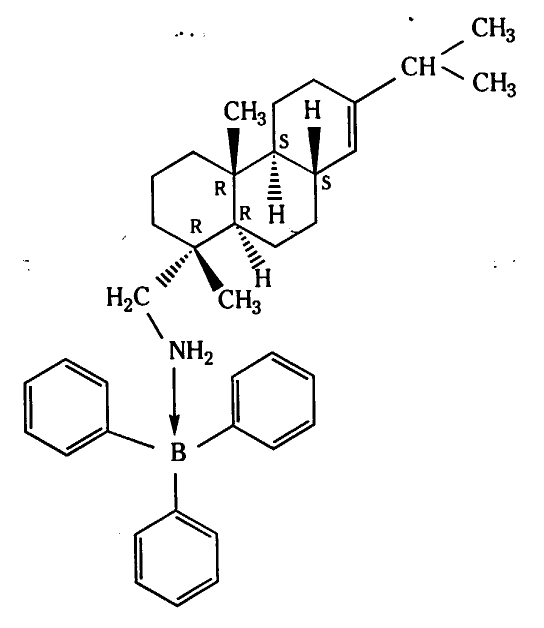 a triphenylborane-dihydroabiethylamine adduct of the formula (3) 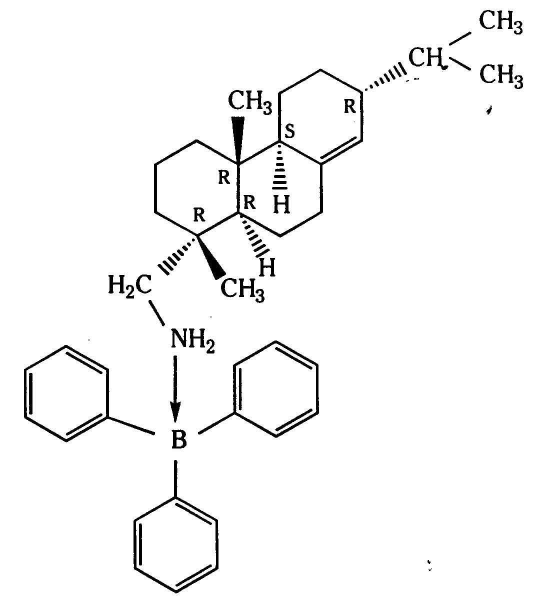 a triphenylborane-dihydroabiethylamine adduct of the formula (4) 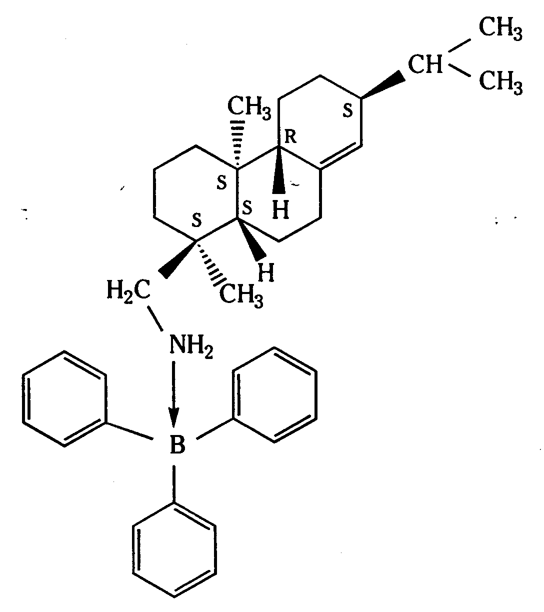 a triphenylborane-dihydroabiethylamine adduct of the formula (5) 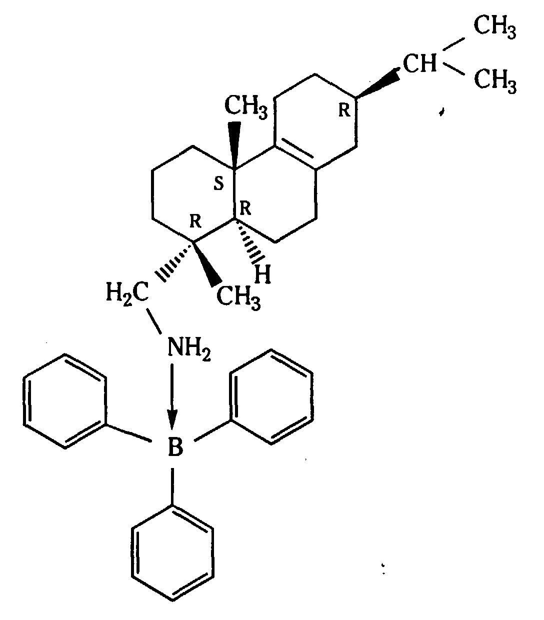 and a triphenylborane-tetrahydroabiethylamine adduct of the formula (6)

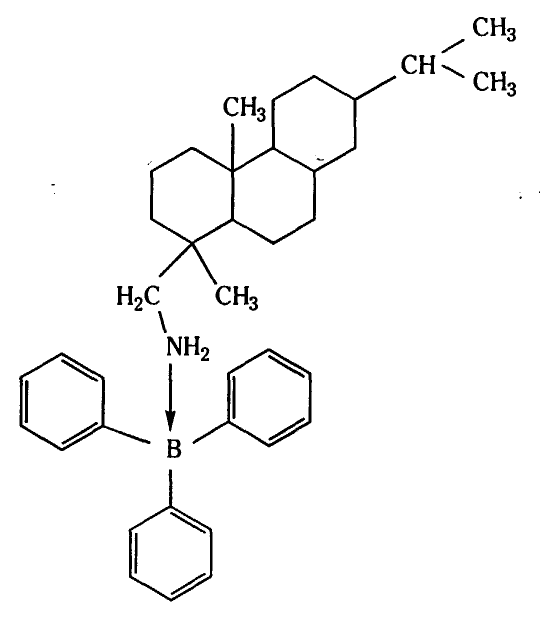

16. An antifouling coating comprising a composition comprising at least one adduct selected from the group consisting of a triphenylborane-dehydroabiethylamine adduct of the formula (1) 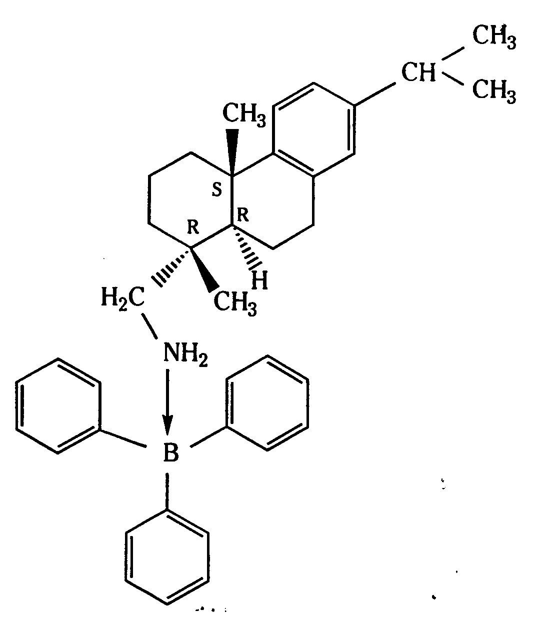 a triphenylborane-dihydroabiethylamine adduct of the formula (2) 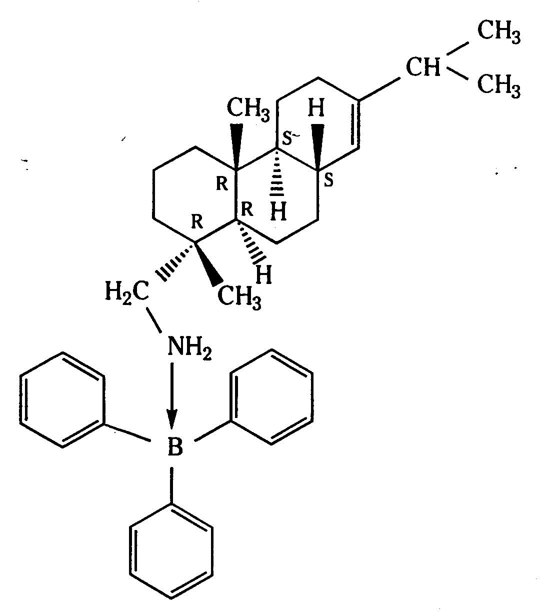 a triphenylborane-dihydroabiethylamine adduct of the formula (3) 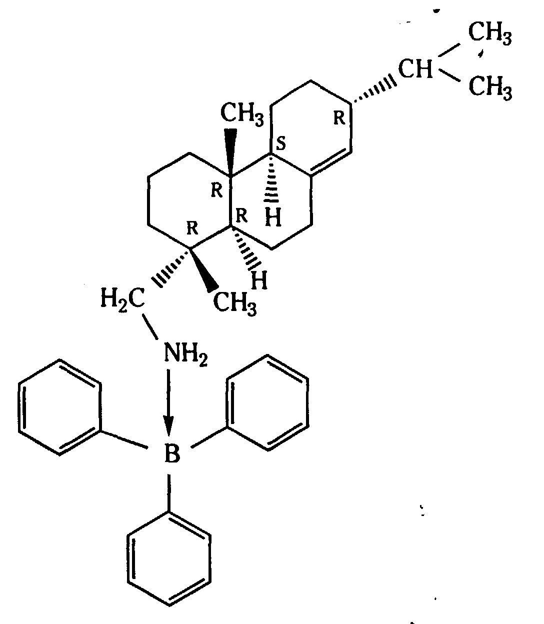 a triphenylborane-dihydroabiethylamine adduct of the formula (4) 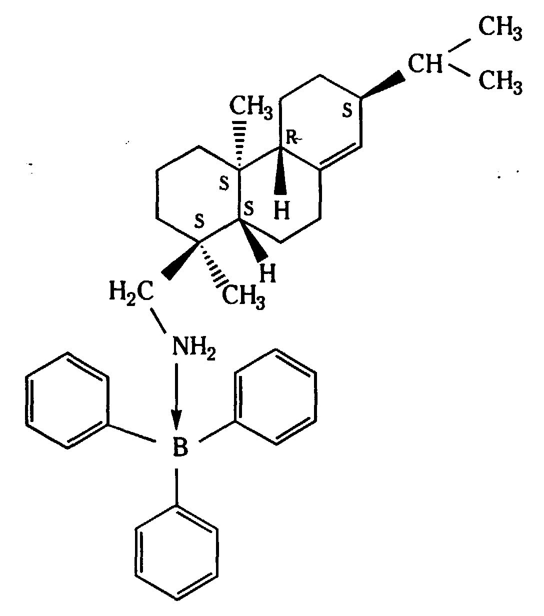 a triphenylborane-dihydroabiethylamine adduct of the formula (5) 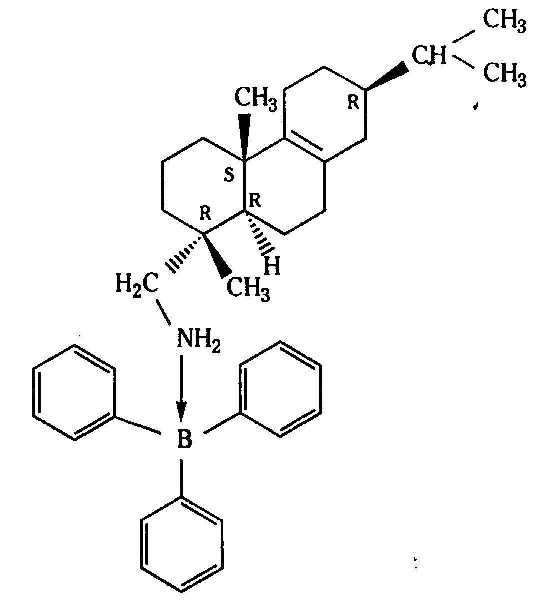 and a triphenylborane-tetrahydroabiethylamine adduct of the formula (6)

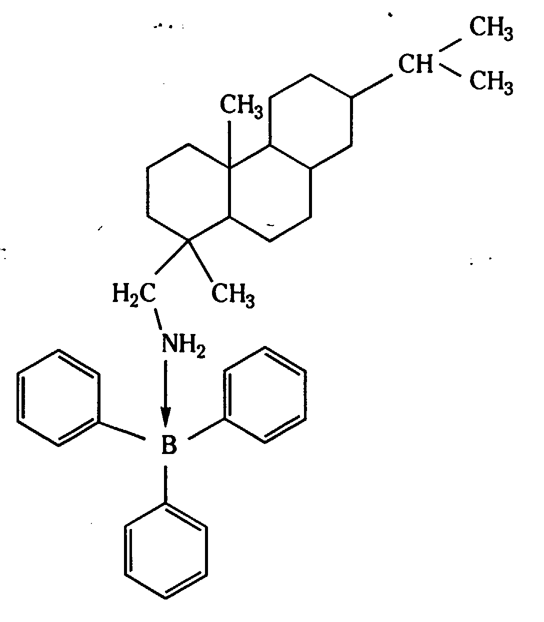

17. The preventive of fouling due to aquatic adhesion organisms according to any one of claims 5 to 8, which comprises, as an active ingredient, at least one compound selected from the group consisting of 1,3-dicyanotetrachlorobenzene, 2-(thiocyanomethylthio)benzothiazole, tetraalkylthiuram disulfide of the formula (8) 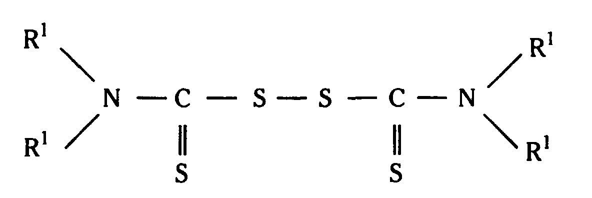 wherein each R¹ may be the same or different and is an alkyl having 1 to 4 carbon atoms, 2,3-dichloromaleimide of the formula (9) 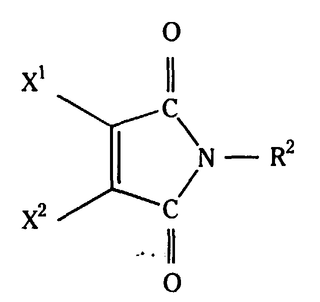 wherein R² is hydrogen, alkyl, halogen-substituted alkyl, cycloalkyl, phenyl, alkyl-substituted phenyl, halogen-substituted phenyl, benzyl, alkyl-substituted benzyl or halogen-substituted benzyl, and X¹ and X² are each chlorine atom, phenol of the formula (10) 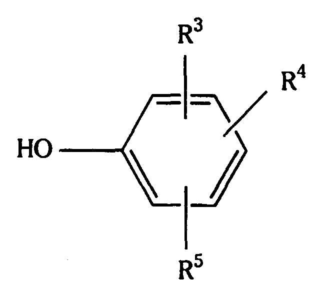 wherein R³, R⁴ and R⁵ may be the same or different and each is hydrogen, alkyl, halogen-substituted alkyl, cycloalkyl, phenyl, halogen, alkoxy, carbonyl, alkenyl or aralkyl, bis(2-pyridylthio-1-oxide)zinc, bis(2-pyridylthio-1-oxide)copper, 2-tert-butylamino-4-cyclopropylamino-6-methylthio-1,3,5-triazine and cuprous oxide.

18. The antifouling agent for a fishnet according to any one of claims 9 to 12, which further comprises, as an active ingredient, at least one compound selected from the group consisting of 1,3-dicyanotetrachlorobenzene, 2-(thiocyanomethylthio)benzothiazole, tetraalkylthiuramdisulfide of the formula (8) 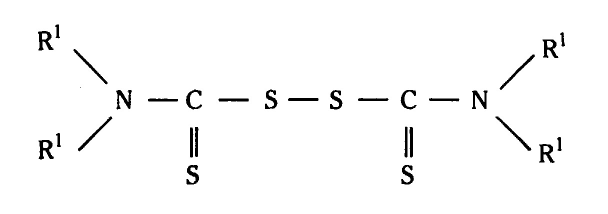 wherein each R¹ may be the same or different and is alkyl having 1 to 4 carbon atoms, 2,3-dichloromaleimide of the formula (9) 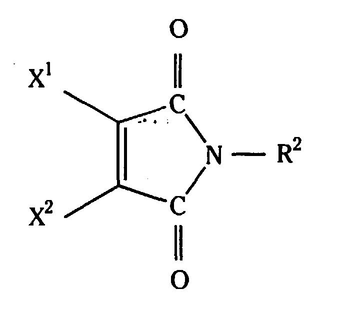 wherein R² is hydrogen, alkyl, halogen-substituted alkyl, cycloalkyl, phenyl, alkyl-substituted phenyl, halogen-substituted phenyl, benzyl, alkyl-substituted benzyl or halogen-substituted benzyl, and X¹ and X² are each chlorine atom and phenol of the formula (10) 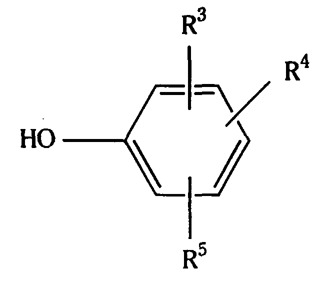 wherein R³, R⁴ and R⁵ may be the same or different and each is hydrogen, alkyl, halogen-substituted alkyl, cycloalkyl, phenyl, halogen, alkoxy, carbonyl, alkenyl or aralkyl.

19. The antifouling coating of any one of claims 13 to 16, which further comprises, as an active ingredient, at least one compound selected from the group consisting of 1,3-dicyanotetrachlorobenzene, 2-(thiocyanomethylthio)benzothiazole, tetraalkylthiuramdisulfide of the formula (8) 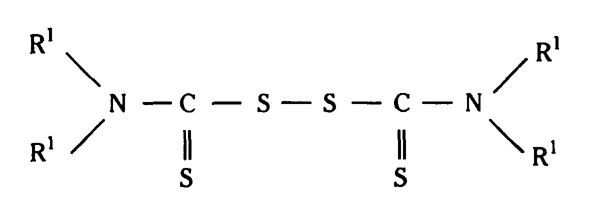 wherein each R¹ may be the same or different and is alkyl having 1 to 4 carbon atoms, 2,3-dichloromaleimide of the formula (9) 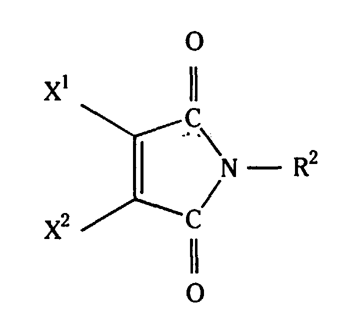 wherein R² is hydrogen, alkyl, halogen-substituted alkyl, cycloalkyl, phenyl, alkyl-substituted phenyl, halogen-substituted phenyl, benzyl, alkyl-substituted benzyl or halogen-substituted benzyl, and X¹ and X² are each chlorine atom, phenol of the formula (10) 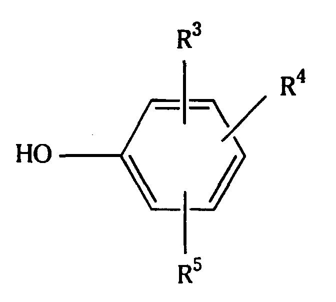 wherein R³, R⁴ and R⁵ may be the same or different and each is hydrogen, alkyl, halogen-substituted alkyl, cycloalkyl, phenyl, halogen, alkoxy, carbonyl, alkenyl or aralkyl, bis(2-pyridylthio-1-oxide)zinc, bis(2-pyridylthio-1-oxide)copper, 2-tert-butylamino-4-cyclopropylamino-6-methylthio-1,3,5-triazine and cuprous oxide.

20. The preventive of fouling due to aquatic adhesion organisms according to any one of claims 5 to 8 and 17, which comprises at least one compound selected from the group consisting of dialkylpolysulfide of the formula (11)
R⁶ ― (S)ₘ ― R⁶
wherein each R⁶ is alkyl having 1 to 20 carbon atoms and m is an integer of 2 to 10, polybutene having an average molecular weight of 200-1,000, paraffin and petrolatum, as an elution-adjusting agent.

21. The antifouling agent for a fishnet according to any one of claims 9 to 12 and 18, which comprises at least one compound selected from the group consisting of dialkylpolysulfide of the formula (11)
R⁶ ― (S)ₘ ― R⁶
wherein each R⁶ is alkyl having 1 to 20 carbon atoms and m is an integer of 2 to 10, polybutene having an average molecular weight of 200-1,000, paraffin and petrolatum, as an elution-adjusting agent.

22. The antifouling coating of any one of claims 13 to 16 and 19, which comprises at least one compound selected from the group consisting of dialkylpolysulfide of the formula (11)
R⁶ ― (S)ₘ ― R⁶
wherein each R⁶ is alkyl having 1 to 20 carbon atoms and m is an integer of 2 to 10, polybutene having an average molecular weight of 200-1,000, paraffin and petrolatum, as an elution-adjusting agent.
